## Europäisches Patentamt

## European Patent Office

## Office européen des brevets

(19)

(11) Veröffentlichungsnummer: **0 321 680**
**B1**

(12) # EUROPÄISCHE PATENTSCHRIFT

(45) Veröffentlichungstag der Patentschrift:
29.08.90

(51) Int. Cl.⁵: **B65G 59/02**

(21) Anmeldenummer: **88118082.2**

(22) Anmeldetag: **31.10.88**

(54) **Vorrichtung zum Aufnehmen von Stückgütern.**

(30) Priorität: **25.11.87 DE 3739864**
**16.04.88 DE 3812756**

(43) Veröffentlichungstag der Anmeldung:
**28.06.89 Patentblatt 89/26**

(45) Bekanntmachung des Hinweises auf die Patenterteilung:
**29.08.90 Patentblatt 90/35**

(84) Benannte Vertragsstaaten:
**AT BE DE ES FR GB IT NL**

(56) Entgegenhaltungen:
**US-A- 998 009**
**US-A- 4 453 874**

(73) Patentinhaber: **SALZGITTER MASCHINENBAU GMBH,**
**Windmühlenbergstrasse 20-22 Postfach 51 16 40,**
**D-3320 Salzgitter 51(DE)**

(72) Erfinder: **Mayer, Rolf, Dr.-Ing., Campestrasse 7/1,**
**D-3340 Wolfenbüttel(DE)**

(74) Vertreter: **Kosel, Peter, Dipl.-Ing. et al, Patentanwälte**
**Dipl.-Inge. Röse, Kosel & Sobisch Odastrasse 4a**
**Postfach 129, D-3353 Bad Gandersheim 1(DE)**

## Beschreibung

Die Erfindung betrifft eine Vorrichtung gemäß dem Oberbegriff des Anspruchs 1.

Bei einer bekannten Vorrichtung dieser Art (US-A-T 998 009) sind nur ein oberes Transportelement in Gestalt eines oberen Förderbandes 4 und nur ein unteres Transportelement in Gestalt eines unteren Förderbandes 5 vorgesehen. Die Förderbänder 4, 5 liegen Rücken an Rücken in Berührung miteinander und sind gegensinnig antreibbar. Vordere 6, 7 und hintere Umlenkwalzen 8, 9 der Förderbänder 4, 5 liegen jeweils senkrecht übereinander. Dadurch ergibt sich am vorderen Ende der Vorrichtung eine ungünstig große Höhe, mit der die Vorrichtung einen gleich hohen Spalt unter dem aufzunehmenden Stückgut 17 öffnen muß. An den aneinanderliegenden Flächen der Förderbänder 4, 5 ist zusätzlicher Verschleiß zu befürchten.

Bekannt ist es aus dem SU-Erfinderschein 123 082, nur ein oberes Transportband 1 und nur ein unteres Transportband 2 übereinander und parallel zueinander anzuordnen und gegensinnig über ein Getriebe 3 anzutreiben. Beide Transportbänder 1, 2 ragen gleich weit nach vorne in Richtung des aufzunehmenden Stückgutes und führen vorne zu einer ungünstig großen Bauhöhe.

Bei einer anderen bekannten Vorrichtung (US-A 4 453 874) sind an einem Rahmen 1 als obere Transportelemente nebeneinander im Wechsel Zahnriemen 17 und Förderriemen 22 angeordnet, die von einer gemeinsamen Antriebswalze 21 angetrieben werden. Jeder Zahnriemen 17 ist über Umlenkrollen, z.B. 18, an den Enden eines Trägers 9 geführt, der mit Laufrollen 10 auf Schienen 11 des Rahmens 1 längsverschiebbar ist. Die vordere Umlenkrolle treibt Aufnehmrollen 16, die nach vorne über die Förderriemen 22 hinausragen. Die bekannte Vorrichtung tritt nur in Berührung mit den aufzunehmenden Stückgütern 24. Insbesondere dürfen die in derselben Richtung angetriebenen Untertrume der Zahnriemen 17 und der Förderriemen 22 zur Vermeidung nachteiliger Reibkontakte nie in Berührung mit der Unterlage der aufzunehmenden Stückgüter 24 treten. Die Vorrichtung muß also stets freitragend, also sehr aufmerksam und sorgfältig, manövriert werden.

Eine ähnliche Vorrichtung, jedoch ohne die Zahnriemen, ist aus Fig. 1 und 3 der DE-A 2 631 942 bekannt.

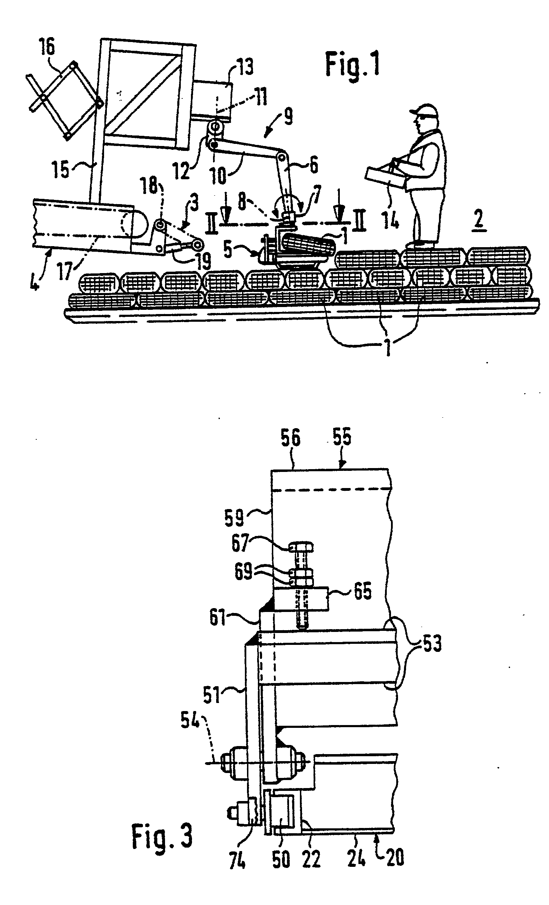

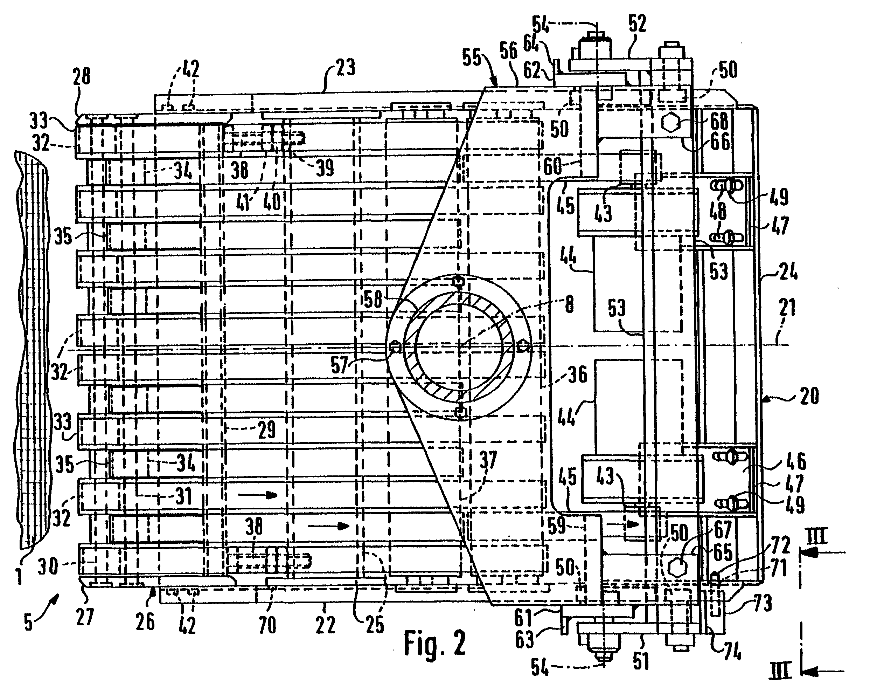

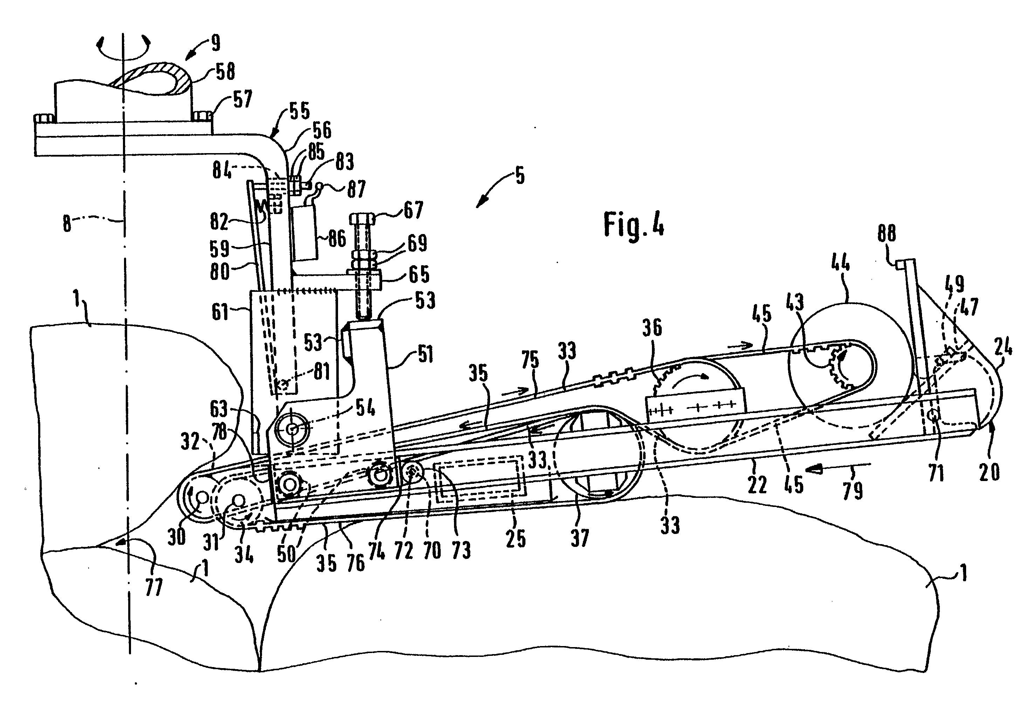

Aus Fig. 2 der DE-A 2 631 942 ist eine andere Ausführungsform bekannt, bei der die gesonderten Aufnehmrollen 1 gemäß Fig. 1 und 3 entfallen. Stattdessen übernimmt der jeweils vorderste Teil 11 des als Förderband 9 ausgebildeten oberen Transportelements das Hochkippen der aufzunehmenden Stückgüter 3, um diese anschließend mit der keilförmigen Vorrichtung zu unterfahren und aufzunehmen. Auch hier darf weder der Untertrum des Förderbands 9 noch der Rest der Vorrichtung in Berührung mit der Unterlage der aufzunehmenden Stückgüter 3 treten, um Reibkontakte zu vermeiden.

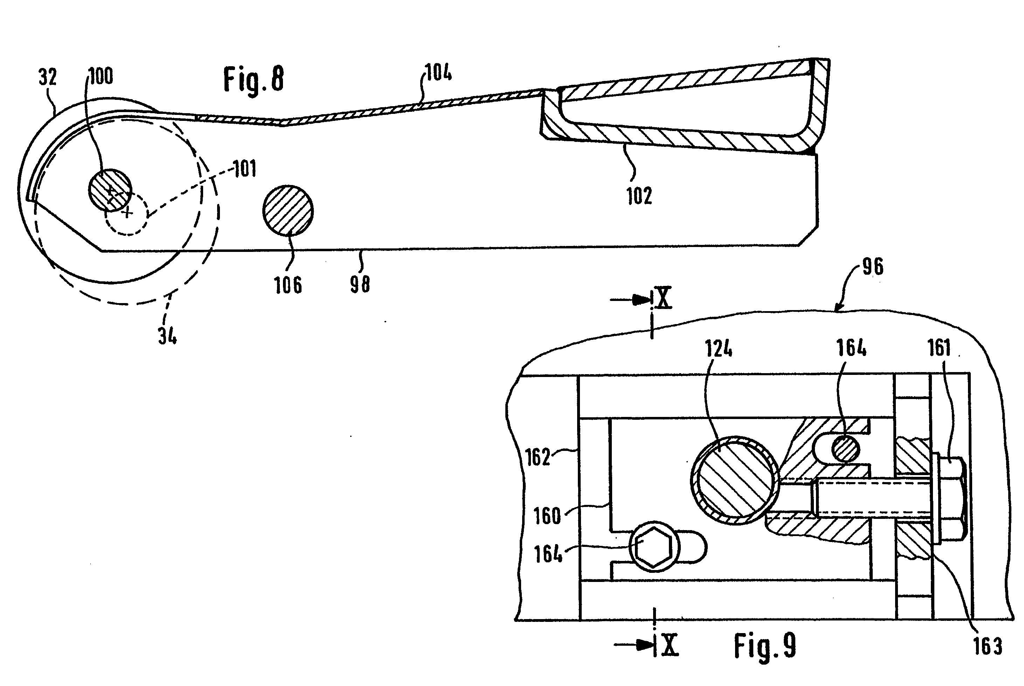

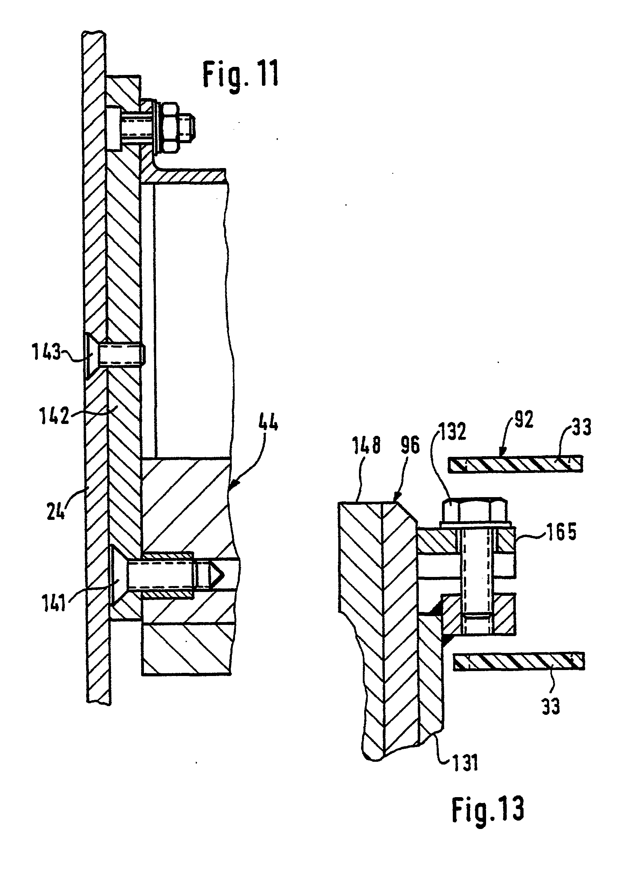

Aus der DE-B 2 137 827 ist eine Vorrichtung bekannt, bei der aufzunehmende Stückgüter A von als Riemen 46 ausgebildeten, keilförmigen oberen Transportelementen zunächst hochgekippt und dann aufgenommen werden. Bei diesem Hochkippen wird ein unerwünscht starkes Kippen (strichpunktiert in Fig. 8) durch oberhalb der aufzunehmenden Stückgüter A angeordnete Gurte 45 verhindert, die als Gegenhalter dienen. Die Untertrume der Gurte 45 sind in der gleichen Richtung angetrieben wie die Obertrume der Riemen 46. Zur Vermeidung nachteiliger Reibungsmitnahme treten auch hier die Untertrume der Riemen 46 nicht in Berührung mit der Unterlage der aufzunehmenden Stückgüter A.

Der Erfindung liegt die Aufgabe zugrunde, einen Aufnehmer zu schaffen, mit dem Stückgüter zum Aufnehmen schonend unterfahren werden können, und das Manövrieren des Aufnehmers während des Aufnehmens zu erleichtern.

Diese Aufgabe ist durch die Merkmale des Anspruchs 1 gelöst. Dank der Ineinanderschachtelung der Transportelemente und der sich daraus wenigstens am aufzunehmenden Stückgut ergebenden minimalen Bauhöhe der Vorrichtung ist es möglich, das aufzunehmende Stückgut mit dem Aufnehmer besonders leicht und schonend zu unterfahren, bis das aufzunehmende Stückgut ganz oder zumindest hinreichend auf dem Aufnehmer liegt. Der Aufnehmer kann dann durch das Manövriergerät in der erforderlichen Weise bis zur Abgabe des aufgenommenen Stückguts gehandhabt werden. Das Aufnehmen des Stückguts geschieht vorzugsweise ohne Relativbewegung zwischen den Transportelementen einerseits und der Unterlage sowie dem aufzunehmenden Stückgut andererseits. Ein solches Aufnehmen ist naturgemäß für das Stückgut und die Unterlage sehr schonend, so daß auch verhältnismäßig empfindliche Stückgüter oder Verpackungen von Stückgütern ohne Schaden zu handhaben sind. Das Unterfahren des aufzunehmenden Stückguts ist erleichtert. Das wenigstens eine obere Transportelement kann auf diese Weise zeitlich vor dem wenigstens einen unteren Transportelement in Berührung mit dem aufzunehmenden Stückgut treten und dieses etwas anheben, so daß der Aufnehmer sich insgesamt leichter in den Spalt unter dem aufzunehmenden Stückgut bewegen kann.

Durch die Merkmale des Anspruchs 2 ist das Unterfahren des aufzunehmenden Stückguts weiter erleichtert. Die Keilform der Transportflächen begünstigt das Eindringen des Aufnehmers in den Spalt unter dem aufzunehmenden Stückgut. In dem Raum zwischen den Transportflächen kann einerseits ein ausreichend steifer Rahmen und andererseits ggf. ein Antrieb für die Transportelemente untergebracht sein.

Die Merkmale des Anspruchs 3 erleichtern die Montage und Demontage des Aufnehmers und führen zu einem hinreichend steifen Rahmen.

Der Bolzen gemäß Anspruch 4 positioniert um einen die dem aufzunehmenden Stückgut zugewandten vorderen Enden der Rahmenteile relativ zueinander und verhindert außerdem eine Torsionsbeanspruchung der die vorderen Rahmenenden tragenden Traversen des Rahmens.

Die Seitenplatten gemäß Anspruch 5 verleihen dem Rahmen insgesamt jede gewünschte Steifigkeit. Die Seitenplatten können z.B. an die Rahmenteile außen angeschraubt und außen glattflächig ausgebildet sein, um Kollisionen mit benachbarten Stückgütern oder dergleichen zu vermeiden.

Die Traverse gemäß Anspruch 6 verleiht dem Rahmen weitere Steifigkeit und kann z.B. als Hohlprofil ausgebildet sein.

Gemäß Anspruch 7 kann das aufgenommene Stückgut in Fortsetzung seiner Aufnahmebewegung praktisch weiter nach hinten durchgefördert werden. Es muß also zur Abgabe des aufgenommenen Stückguts von dem Aufnehmer keine Förderrichtungsumkehr stattfinden. Dies ermöglicht einfachere Antriebe für die Transportelemente und gestattet außerdem einen kontinuierlicheren Betrieb.

Mit den Merkmalen des Anspruchs 8 ergeben sich ein wirksamer Schutz des Antriebs, eine gute Raumausnutzung, ein Gegengewicht zu dem vorderen Bereich des Aufnehmers mit dem darauf liegenden Stückgut und die Möglichkeit, den Antrieb wirksam zu belüften und zu kühlen.

Der Antrieb gemäß Anspruch 9 kann z.B. als Trommelmotor mit integriertem Untersetzungsgetriebe ausgebildet sein.

Anspruch 10 kennzeichnet besonders günstige Transportelemente. Zweckmäßigerweise sind mehrere obere Transportbänder und mehrere untere Transportbänder jeweils im Abstand nebeneinander angeordnet. Die Obertrume der oberen Transportbänder bilden auf diese Weise eine ausreichend große Stützfläche für das aufzunehmende Stückgut. Der Rahmen des Aufnehmers kann mit seiner Vorderkante am unteren Bereich des aufzunehmenden Stückguts angesetzt werden. Sobald die Transportbänder laufen, stützen sich die Untertrume der unteren Transportbänder entweder auf einem Boden oder auf einem tieferliegenden Stückgut ab. Der Reibungskoeffizient und/oder die Oberflächenprofilierung der Transportbänder ist derart, daß im wesentlichen kein Schlupf zwischen den Transportbändern und der Unterlage einerseits sowie dem aufzunehmenden Stückgut andererseits auftritt. Vielmehr unterfährt in diesem Fall der Aufnehmer selbsttätig das aufzunehmende Stückgut, das dann durch das Manövriergerät in der erforderlichen Weise gehandhabt werden kann. Es ist eine günstige Lösung für den Antrieb der Transportbänder gefunden. Bei gleichem wirksamen Durchmesser der Antriebswalzen ergibt sich eine wünschenswert gleich große Bewegungsgeschwindigkeit an den aktiven Trumen der Transportbänder.

Gemäß Anspruch 11 ist ein zuverlässiger, schlupffreier Antrieb gewährleistet. Die Zähne auf beiden Seiten der Transportbänder dienen einerseits dem Formschluß beim Eingriff in die Antriebswalze und zum anderen als Reibprofilierung gegenüber der Unterlage und dem aufzunehmenden Stückgut für besonders schlupfarmen Betrieb.

Die Merkmale des Anspruchs 12 bieten eine raumsparende und geschützte Ausbildung des Antriebs.

Gemäß Anspruch 13 sind die oberen und unteren Transportbänder gesondert angetrieben. Die eine Antriebswalze kann z.B. über die Abtriebswelle des Antriebs und die andere Antriebswalze über ein Umkehrgetriebe angetrieben sein, das durch die Abtriebswelle getrieben wird. Auch hier können die Transportbänder als Zahnbänder ausgebildet sein. Jede Antriebswalze kann ihren eigenen Antrieb, oder beide Antriebswalzen können einen gemeinsamen Antrieb aufweisen.

Mit den Merkmalen des Anspruchs 14 oder 15 lassen sich die Transportbänder auf einfache Weise und schnell in der Spannung einstellen.

Mit den Merkmalen des Anspruchs 16 oder 17 können die Umlenkrollen oder Rahmenteile zur Erzielung einer geringen Bauhöhe an ihrem dem aufzunehmenden Stückgut zugewandten Ende ineinander verzahnt ausgebildet werden. Dadurch wird das Eindringen des Aufnehmers in den Spalt unter dem aufzunehmenden Stückgut erleichtert.

Die Ausbildung gemäß Anspruch 18 ist baulich verhältnismäßig einfach und ergibt am vorderen Ende des Aufnehmers eine günstig geringe Bauhöhe.

Die Merkmale des Anspruchs 19 bieten Vorteile insbesondere bei flächigen Stückgütern, wie Kisten oder Kartons. Falls nur Kugelrollen vorgesehen sind, kann der Aufnehmer durch die Kraft des Manövriergeräts in den Spalt unter das aufzunehmende Stückgut gedrückt werden.

Gemäß Anspruch 20 kann in der gleichen Weise gemäß Anspruch 19 verfahren werden, wenn die Transportwalzen nicht angetrieben sind. Zumindest einige der Transportwalzen können aber auch drehend angetrieben sein.

Die Merkmale des Anspruchs 21 erleichtern den Automatisierbetrieb der Vorrichtung.

Gemäß Anspruch 22 läßt sich der Rahmen nach Bedarf gegenüber dem übrigen Aufnehmer festlegen. Die Arretierelemente können z.B. als Arretierbolzen ausgebildet sein und in beiden Endstellungen des Rahmens jeweils in ein Loch einer der Führungsschienen eingreifen. Als Arretierelemente können auch Bremszangen Verwendung finden, die an dem übrigen Aufnehmer angebracht und gesteuert in reibenden oder formschlüssigen Eingriff mit einer der Führungsschienen gebracht werden.

Die Merkmale des Anspruchs 23 erleichtern wiederum das Unterfahren des aufzunehmenden Stückguts. Der Wippwinkel ist durch ggf. einstellbare Anschläge des Halters in beiden Richtungen begrenzbar.

Durch die Merkmale des Anspruchs 24 werden die Transportbänder selbsttätig dann stillgelegt, wenn das aufgenommene Stückgut seine optimale Endstellung auf dem Aufnehmer für den Weitertransport zu einer Abgabestelle erreicht hat.

Der Rahmen kann durch einen um eine Hochachse drehbaren Halter des Aufnehmers getragen sein. Dadurch ist ein wichtiger Freiheitsgrad für das Manövrieren des aufgenommenen Stückguts geschaffen. Im übrigen verfügt das Manövriergerät über alle Freiheitsgrade für die Bewegung des aufgenommenen Stückguts. Bei dem Manövriergerät kann es sich z.B. um einen Roboter handeln, der einen Förderer einer Vorrichtung zum Entladen von Stückgütern aus einem Laderaum eines Schiffes mit Stückgütern beschickt.

Weitere Merkmale und Vorteile der Erfindung ergeben sich aus der nachfolgenden Figurenbeschreibung, in der die Erfindung anhand von Ausführungsbeispielen näher erläutert wird. Es zeigt:

Fig. 1 eine Seitenansicht eines Roboters an einem Förderer, wobei der Roboter einen Aufnehmer trägt,

Fig. 2 die Schnittansicht nach Linie II-II in Fig. 1, jedoch ohne aufgenommenes Stückgut, in vergrößerter Darstellung,

Fig. 3 im wesentlichen die Ansicht gemäß Linie III-III in Fig. 2,

Fig. 4 eine Seitenansicht des Aufnehmers gemäß Fig. 2 in einer ersten Betriebsendstellung,

Fig. 5 die Seitenansicht gemäß Fig. 4 in einer zweiten Betriebsendstellung,

Fig. 6 die Schnittansicht nach Linie VI-VI in Fig. 7 durch einen anderen Aufnehmer, zusammengesetzt aus den nebeneinander anzuordnenden Fig. 6A und 6B,

Fig. 7 die teilweise geschnittene Draufsicht auf den Aufnehmer gemäß Fig. 6, zusammengesetzt aus den nebeneinander anzuordnenden Fig. 7A und 7B,

Fig. 8 die Schnittansicht nach Linie VIII-VIII in Fig. 7 in vergrößerter Darstellung,

Fig. 9 die Schnittansicht nach Linie IX-IX in Fig. 7 in vergrößerter Darstellung,

Fig. 10 die Schnittansicht nach Linie X-X in Fig. 9,

Fig. 11 die Schnittansicht nach Linie XI-XI in Fig. 7 in vergrößerter Darstellung,

Fig. 12 die Schnittansicht nach Linie XII-XII in Fig. 6 in vergrößerter Darstellung,

Fig. 13 die Schnittansicht nach Linie XIII-XIII in Fig. 6 in vergrößerter Darstellung,

Fig. 14 die Ansicht XIV in Fig. 6 in vergrößerter Darstellung, teilweise im Schnitt,

Fig. 15 die Schnittansicht nach Linie XV-XV in Fig. 16 durch einen weiteren Aufnehmer,

Fig. 16 die Draufsicht auf den Aufnehmer gemäß Fig. 15, teilweise im Schnitt,

Fig. 17 die Schnittansicht nach Linie XVII-XVII in Fig. 15 in vergrößerter Darstellung,

Fig. 18 einen schematischen Längsschnitt durch den vorderen Bereich eines anderen Aufnehmers,

Fig. 19 einen schematischen Längsschnitt durch den vorderen Bereich eines weiteren Aufnehmers,

Fig. 20 die Ansicht von unten auf einen Teil der Darstellung gemäß Fig. 19,

Fig. 21 einen schematischen Längsschnitt durch den vorderen Teil eines weiteren Aufnehmers und

Fig. 22 die Schnittansicht nach Linie XXII-XXII in Fig. 21.

In Fig. 1 sind Stückgüter 1, in diesem Fall Säcke, in einem Laderaum 2 eines Schiffes gelagert. Die Stückgüter 1 sollen nacheinander aufgenommen und auf einen Vorsatzförderer 3 aufgelegt werden, der die Stückgüter 1 nacheinander an einen Förderer 4 übergibt.

Das Aufnehmen der Stückgüter 1 geschieht durch einen Aufnehmer 5, der an einem Arm 6, durch einen Drehantrieb 7 um eine Hochachse 8 drehbar, aufgehängt ist. Der Arm 6 ist Bestandteil eines als Roboter ausgebildeten Manövriergeräts 9 und ist an einem weiteren Arm 10 wippbar angelenkt. Der Arm 10 ist seinerseits wippbar an einem um eine Hochachse 11 drehbaren Träger 12 angelenkt. Der Träger 12 erfährt seine Drehung durch einen nichtgezeichneten Drehantrieb.

Das Manövriergerät 9 wird in allen Freiheitsgraden durch eine elektronische Steuerung 13 gesteuert, die nach Programmsteuerung oder einer von einem Bedienungsmann getragenen, von Hand betätigbaren Steuerung 14 arbeitet. Die elektronische Steuerung 13 ist an einer Haltevorrichtung 15 des Förderers 4 befestigt. An der Haltevorrichtung 15 greift ein Scherengitter 16 an, mit dem sich der Förderer 4 in nicht dargestellter Weise in Längsrichtung teleskopieren läßt.

Die in Fig. 1 dargestellte Vorrichtung läßt sich wie folgt betreiben: Der Aufnehmer 5 wird durch die Bedienungsperson durch Handsteuerung mittels der Steuerung 14 in eine Aufnehmposition an einem aufzunehmenden Stückgut 1 bewegt. Es wird dann auf eine Automatiksteuerung durch die elektronische Steuerung 13 übergegangen, durch die folgende Schritte selbsttätig ablaufen: Der Aufnehmer 5 unterfährt in später zu beschreibender Weise das aufzunehmende Stückgut 1; das Manövriergerät 9 hebt das aufgenommene Stückgut an, dreht es um die Hochachse 8 und bewegt es zu einer Übergabeposition an dem Vorsatzförderer 3; das Stückgut wird durch den Aufnehmer 5 auf den Vorsatzförderer 3 gefördert; das Manövriergerät 9 bewegt den Aufnehmer 5 zurück in die Aufnehmposition und dreht ihn dabei zurück um die Hochachse 8. Anschließend bewegt die Bedienungsperson den Aufnehmer 5 durch Handsteuerung mittels der Steuerung 14 in eine neue Aufnehmposition an einem weiteren aufzunehmenden Stückgut 1, worauf sich die vorerwähnten, selbsttätig ablaufenden Schritte ständig wiederholen.

Auf diese Weise ist die Bedienungsperson von entbehrlicher Aufmerksamkeit während des Aufnehmens entlastet. Außerdem laufen die durch die Automatiksteuerung veranlaßten Bewegungen mit großer Sicherheit und reproduzierbar ab, ohne daß Beschädigungen der Vorrichtung durch Fehlsteuerung zu befürchten sind.

Alternativ könnte der Aufnehmer 5 das aufgenommene Stückgut 1 auch unmittelbar an ein Transportband 17 des Förderers 4 abgeben, wodurch der Vorsatzförderer 3 überflüssig würde. Der Vorsatzförderer ist jedoch um eine waagerechte Achse 18 wippbar durch einen Antrieb 19, so daß der Vorsatzförderer 3 in eine optimale Wippstellung bezüglich des von dem Aufnehmer 5 zu übernehmenden Stückguts 1 gebracht werden kann.

Gemäß Fig. 2 weist der Aufnehmer 5 einen im wesentlichen rechteckigen Rahmen 20 auf. Der Rahmen 20 besitzt an gegenüberliegenden Längsseiten jeweils eine sich parallel zu einer Längsebene 21 des Aufnehmers 5 erstreckende Führungsschiene 22 und 23, die an einem Ende durch eine Traverse 24 und in der Nähe des anderen Endes durch eine Traverse 25 fest miteinander verbunden sind. Der Rahmen 20 weist an seiner dem aufzunehmenden Stückgut 1 zugewandten Seite einen zwischen den Führungsschienen 22,23 eingepaßten Umlenkkopf 26 auf. Der Umlenkkopf ist selbst rahmenartig mit Seitenwangen 27 und 28 ausgebildet, zwischen denen hinten eine Traverse 29 und vorne, im Abstand voneinander, durchgehende Achsen 30 und 31 befestigt sind.

Auf der Achse 30 sind in seitlichem Abstand voneinander Umlenkrollen 32 für obere Transportbänder 33 frei drehbar gelagert. In ähnlicher Weise sind auf der Achse 31, seitlich gegenüber den Umlenkrollen 32 versetzt, Umlenkrollen 34 für untere Transportbänder 35 frei drehbar gelagert.

Dabei ist die Achse 31 etwas nach hinten gegenüber der Achse 30 zurückgesetzt, so daß die oberen Transportbänder 33 sich in Richtung des aufzunehmenden Stückguts 1 über die unteren Transportbänder 35 hinaus erstrecken.

Die oberen Transportbänder 33 sind hinten über eine die oberen Transportbänder 33 antreibende erste Antriebswalze 36 geführt, die sich quer über den Rahmen 20 erstreckt und frei drehbar an den Führungsschienen 22,23 gelagert ist. Die oberen Transportbänder 33 sind außerdem über eine zweite Antriebswalze 37 geführt, die sich ebenfalls quer über den Rahmen 20 erstreckt und an den Führungsschienen 22, 23 frei drehbar gelagert ist. Über die zweite Antriebswalze 37 sind auch die unteren Transportbänder 35 geführt, so daß die unteren Transportbänder 35 durch die von den oberen Transportbändern 33 drehend mitgenommene zweite Antriebswalze 37 angetrieben werden.

Zur gleichzeitigen Nachspannung der oberen Transportbänder 33 und der unteren Transportbänder 35 ist der Umlenkkopf 26 mit seinen Seitenwangen 27,28 relativ zu den Führungsschienen 22, 23 verschiebbar. Diese Verschiebung geschieht durch Sapnnschrauben 38, deren Kopf jeweils an einem seitlichen Ende der Traverse 29 befestigt ist, und deren anderes Ende durch eine Durchbrechung 39 in der Traverse 25 hindurchragt. Eine Mutter 40 jeder Spannschraube 38 liegt an der Traverse 25 an. Wird die Mutter gedreht, verschiebt sich der Umlenkkopf 26 relativ zu den Führungsschienen 22, 23. Die gewünschte Relativstellung wird durch eine Kontermutter 41 fixiert. Anschließend werden noch zur Erhöhung der Steifigkeit des Rahmens 20 die Seitenwangen 27, 28 durch Feststellschrauben 42 lösbar an den Führungsschienen 22,23 befestigt, wobei entweder in den Führungsschienen 22,23 oder in den Seitenwangen 27,28 Langlöcher vorgesehen sind, durch die hindurch die Feststellschrauben 42 sich erstrecken.

Über die erste Antriebswalze 36 und jeweils ein Ritzel 43 eines Antriebs 44 ist ein Riemen 45 geführt. Die erste Antriebswalze 36 wird also durch die beiden Riemen 45 drehend angetrieben.

Jeder der beiden Antriebe 44 ist mit einer Montageplatte 46 entlang einer bezüglich des Riemens 45 schiefen Ebene 47 verschiebbar. Die Montageplatten 46 weisen parallel zu der Längsebene 21 angeordnete Langlöcher 48 auf, durch die hindurch sich jeweils eine in die schiefe Ebene 47 eingeschraubte Feststellschraube 49 erstreckt. Auf diese Weise läßt sich die Spannung der Riemen 45 einstellen. Die schiefen Ebenen 47 sind Bestandteil der Traverse 24.

Wie dies in Fig. 4 angedeutet ist, können die oberen Transportbänder 33 und die unteren Transportbänder 35 als Zahnbänder ausgebildet sein, die auf gegenüberliegenden Seiten mit Zähnen versehen sind. Komplementäre Zahnungen weisen dann die Umlenkrollen 32, 34 sowie die erste Antriebswalze 36 und die zweite Antriebswalze 37 auf. Auch die Riemen 45 können gemäß Fig. 4 als Zahnriemen ausgebildet sein. Dadurch wird in allen Fällen die Traktion verbessert und praktisch schlupffrei gestaltet.

Die Führungsschienen 22,23 sind von U-förmigem, zur Seite hin offenem Querschnitt. In jede Führungsschiene 22,23 greifen von außen zwei im Abstand voneinander angeordnete Tragrollen 50 ein, die an führungsstücken 51 und 52 außerhalb der Führungsschienen 22,23 drehbar gelagert sind. Die Führungsstücke 51,52 sind durch eine Traverse 53 fest miteinander verbunden und bilden mit dieser einen steifen Bügel.

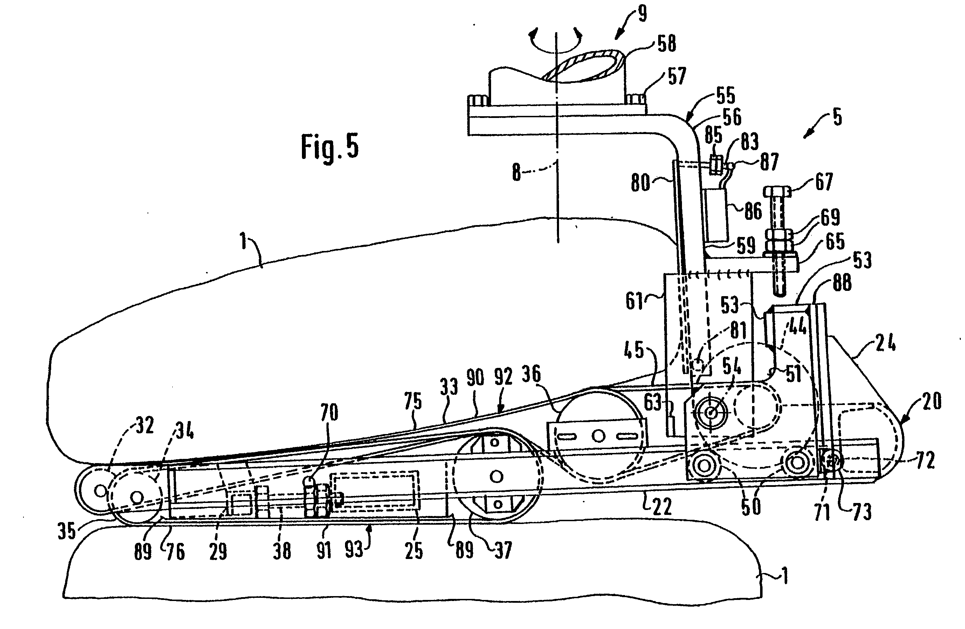

Jedes Führungsstück 51,52 ist um eine waagerechte Wippachse 54 eines Halters 55 des Aufnehmers 5 wippbar gelagert. Der Halter 55 weist ein im wesentlichen gabelförmiges Oberteil 56 auf, das in der Mitte mit Schrauben 57 an ein Abtriebsrohr 58 des Drehantriebs 7 (Fig. 1) angeflanscht ist. Äußere Schenkel 59 und 60 des Oberteils 56 sind, in Seitenansicht, L-förmig nach unten hin abgebogen. An jeden Schenkel 59, 60 ist seitlich außen eine sich parallel zu der Längsebene 21 erstreckende Platte 61 und 62 angeschweißt, an denen in der vorerwähnten Weise die Führungsstücke 51,52 wippbar gelagert sind. Jede Platte 61,62 weist unten und vorne (vgl. auch Fig. 4 und 5) einen sich nach außen erstreckenden Anschlag 63 und 64 zur Begrenzung des Wippens der Führungsstücke 51 und 52 und damit des Rahmens 20 im Uhrzeigersinn gemäß Fig. 4 auf.

Mit jedem Schenkel 59,60 und der zugehörigen Platte 61, 62 ist ein im wesentlichen waagerechtes, sich nach hinten erstreckendes Blech 65 und 66 verschweißt. In jedes Blech 65, 66 ist eine Anschlagschraube 67 und 68 eingeschraubt und durch Kontermuttern 69 in der gewünschten Anschlagstellung fixiert. Die Anschlagschrauben 67,68 wirken mit der Traverse 53 zusammen und begrenzen den Wippwinkel der Führungsstücke 51,52 und damit des Rahmens 20 im Gegenuhrzeigersinn gemäß Fig. 4.

Die Führungsschiene 22 ist an ihrer Basis vorne und hinten jeweils mit einer Bohrung 70 und 71 versehen, in die ein als Anker ausgebildetes Arretierelement 72 wahlweise eingreift. Das Arretierelement 72 ist Bestandteil eines Elektromagneten 73, der an einer Halteplatte 74 des Führungsstücks 51 montiert ist. Die Bohrungen 70,71 sind so angeordnet, daß der Rahmen 20 in seinen Betriebsendstellungen (vgl. Fig. 4 und 5) durch Erregung des Elektromagneten 73 und damit Vortreiben des Arretierelements 72 relativ zu den Führungsstücken 51, 52 fixiert werden kann. Der Elektromagnet 73 muß entregt und dadurch das Arretierelement 72 aus der betreffenden Bohrung 70 oder 71 zurückgezogen werden, bevor der Rahmen 20 relativ zu den Führungsstücken 51, 52 aus seiner bis dahin eingenommenen Betriebsendstellung heraus bewegt werden kann.

Fig. 3 zeigt Einzelheiten der Konstruktion gemäß Fig. 2. Dabei ist der Elektromagnet 73 gemäß Fig. 2 zur besseren Übersicht fortgelassen.

In Fig. 4 ist durch die eingetragenen Pfeile erkennbar, daß die oberen Transportbänder 33 gegenläufig zu den unteren Transportbändern 35 angetrieben werden. Ein Obertrum 75 jedes oberen Transportbandes 33 ist oberhalb der unteren Transportbänder 35 angeordnet, und ein Untertrum 76 jedes unteren Transportbandes 35 ist unterhalb der oberen Transportbänder 33 angeordnet. Die Obertrume 75 der oberen Transportbänder 33 und die Untertrume 76 der unteren Transportbänder 35 divergieren voneinander von dem aufzunehmenden Stückgut 1 weg. Auf diese Weise bilden die Obertrume 75 und die Untertrume 76 eine Art Keil, der verhältnismäßig leicht in einen Spalt 77 zwischen übereinander gestapelten Stückgütern 1 eindringen und damit das obere Stückgut 1 unterfahren kann.

An dem dem aufzunehmenden Stückgut 1 zugewandten vorderen Ende der Führungsschiene 22 - und in gleicher Weise am vorderen Ende der Führungsschiene 23 - ist an den Führungsschienen 22, 23 jeweils ein im wesentlichen senkrechtes Anschlagblech 78 befestigt, das als Anschlag für die jeweils vordere Tragrolle 50 der Führungsstücke 51, 52 dient. Die Anschlagbleche 78 definieren daher eine hintere oder erste Betriebsendstellung des Rahmens 20 relativ zu den Führungsstücken 51, 52 und damit diejenige Position, in der das Arretierelement 72 zur vorübergehenden Fixierung der ersten Betriebsendstellung in die Bohrung 70 eingetrieben werden kann.

In dieser ersten Betriebsendstellung gemäß Fig. 4 ist normalerweise, d.h. ohne daß der Aufnehmer 5 Berührung mit einem Stückgut 1 hat, der Rahmen 20 in Abweichung von der Darstellung gemäß Fig. 4 im Uhrzeigersinn um die Wippachse 54 geschwenkt, bis die Führungsstücke 51, 52 zur Anlage an den Anschlägen 63, 64 gekommen sind. In dieser Normalstellung wird der Aufnehmer 5 durch die Bedienungsperson mit der Steuerung 14 von Hand bewegt, bis zumindest einige der oberen Transportbänder 33 vorne in Berührung mit dem aufzunehmenden Stückgut 1 treten. Außerdem wird der Halter 55 soweit abgesenkt, bis zumindest einige der Untertrume 76 auf einem anderen als dem aufzunehmenden Stückgut 1 aufliegen. Dabei wippt der Rahmen 20 um die Wippachse 54 im Gegenuhrzeigersinn. Der Rahmen 20 hebt dabei die Führungsstücke 51, 52 von den Anschlägen 63, 64 ab und legt die Traverse 53 gegen die Anschlagschrauben 67, 68. Dann wird, falls vorher vorgeschoben, das Arretierelement 72 aus der Bohrung 70 herausgezogen. Es werden die Antriebe 44 eingeschaltet und damit alle Transportbänder 33, 35 in Pfeilrichtung in Bewegung gesetzt.

Spätestens von diesem Zeitpunkt an kann die Bedienungsperson auf Automatiksteuerung durch die elektronische Steuerung 13 (Fig. 1) übergehen.

Dadurch, daß die oberen Tansportbänder 33 nach vorne die unteren Tansportbänder 35 überragen, wird das aufzunehmende Stückgut 1 durch die oberen Transportbänder 33 zunehmend angehoben und dadurch der Spalt 77 geöffnet. Gleichzeitig werden auch die unteren Transportbänder 35 angetrieben. Die Untertrume 76 sollen jedoch im Normalfall nicht auf dem darunter befindlichen Stückgut 1 gleiten, sondern gewissermaßen einen Momentanpol bilden, also schlupffrei auf das darunter liegende Stückgut 1 gedrückt werden. Das hat zur Folge, daß sich der Rahmen 20 relativ zu den Führungsstücken 51, 52 in Richtung eines Pfeils 79 vorschiebt und damit zunehmend in den Spalt 77 eindringt und das aufzunehmende Stückgut 1 unterfährt.

Wenn dieses Unterfahren abgeschlossen ist und das aufgenommene Stückgut 1 sich praktisch in der Position gemäß Fig. 1 befindet, wird das aufgenommene Stückgut 1 schließlich durch die Obertrume 75 gegen eine Pendelklappe 80 gefahren. Die Pendelklappe 80 ist um eine waagerecht Achse 81 wippbar an dem Schenkel 59 gelagert und durch eine Druckfeder 82 zu dem aufgenommenen Stückgut 1 hin vorgespannt. Am oberen Ende der Pendelklappe 80 ist auf der Rückseite ein Schaltstift 83 befestigt, der durch eine genügend große Öffnung 84 in dem Schenkel 59 hindurch ragt und auf dessen Rückseite Kontermuttern 85 trägt.

Auf der Rückseite des Schenkels 59 ist ein Endschalter 86 angebracht, dessen Schaltelement 87 sich in der Bewegungsbahn des Schaltstifts 83 befindet.

In einer gegenüber Fig. 4 ganz nach links gefahrenen, zweiten Betriebsendstellung (vgl. Fig. 5) fährt ein Anschlag 88 der Traverse 24 gegen die Traverse 53. In dieser zweiten Betriebsendstellung des Rahmens 20 fluchtet das Arretierelement 72 mit der Bohrung 71.

Dieser Augenblick ist in Fig. 5 dargestellt. Es wird nun der Elektromagnet 73 erregt und dadurch das Arretierelement 72 in die Bohrung 71 eingetrieben. Damit ist der Rahmen 20 vorübergehend gegenüber den Führungsstücken 51, 52 fixiert. Der Rahmen 20 hat sich eine um die Wippachse 54 gewippte Zwischenstellung gesucht, die einerseits die Führungsstücke 51, 52 von den Anschlägen 63, 64 und andererseits die Traverse 53 von den Anschlagschrauben 67, 68 abgehoben hat.

Sobald nun das aufgenommene Stückgut 1 die Pendelklappe 80 zur Anlage an den Schenkel 59 um die Achse 81 gewippt hat, schaltet der Schaltstift 83 das Schaltelement 87 und damit den Endschalter 86. Dadurch werden die Antriebe 44 abgeschaltet und die Transportbänder 33, 35 stillgesetzt. Die Untertrume 76 werden durch Anheben des Aufnehmers 5 nach und nach von dem darunter befindlichen Stückgut 1 abgehoben. Bei diesem Vorgang wippen der Rahmen 20 und die Führungsstücke 51, 52 um die Wippachse 54, bis die Traverse 53 gemäß Fig. 4 in Berührung mit den Anschlagschrauben 67, 68 getreten ist. In dieser Position wird nun der Aufnehmer 5 mit dem darauf befindlichen Stückgut 1 soweit erforderlich um die Hochachse 8 gedreht und, wie zuvor schon erwähnt, entweder zu dem Vorsatzförderer 3 (Fig. 1) oder unmittelbar zu dem Transportband 17 des Förderers 4 bewegt. Dort angelangt, werden die Antriebe 44 derart eingeschaltet, daß die Transportbänder 33, 35 in entgegengesetzter Richtung wie beim Aufnehmen des Stückguts 1 laufen. Dabei wird der Stromkreis des Endschalters 86 überbrückt und das Stückgut 1 von dem Aufnehmer 5 heruntergefördert. Sobald das aufgenommene Stückgut 1 den Aufnehmer 5 auf diese Weise verlassen hat, werden die Antriebe 44 wieder abgeschaltet und der Aufnehmer 5 in der zuvor beschriebenen Weise in die vorherige Aufnehmposition gefahren. Dort übernimmt die Bedienungsperson in Handsteuerung, zieht das Arretierelement 72 aus der Bohrung 71 heraus und fährt behutsam das die Umlenkrollen 32 umschlingende vordere Ende der oberen Transportbänder 33 gegen das nächste aufzunehmende Stückgut, ohne daß zu diesem Zeitpunkt die Transportbänder 33, 35 noch laufen. Dieser Vorgang wird fortgesetzt, bis sich der Rahmen zunehmend relativ zu den Führungsstücken 51, 52 in seine in Fig. 4 gezeigte erste Betriebsendstellung verschoben hat.

Dort braucht nun normalerweise das Arretierelement 72 nicht mehr in die Bohrung 70 vorgeschoben zu werden. Vielmehr senkt die Bedienungsperson zunächst den Aufnehmer 5 in Berührung mit dem darunter liegenden Stückgut 1 oder beispielsweise einem Boden ab. Sodann schaltet die Bedienungsperson die Antriebe 44 ein, worauf sich der zuvor beschriebene Vorgang des Aufnehmens vorzugsweise selbsttätig wiederholt.

Aus Gründen des schlupffreien Antriebs brauchten die unteren Transportbänder 35 eigentlich nur innen mit einer Zahnung versehen zu sein. Wenn die unteren Transportbänder 35 gemäß Fig. 4 jedoch auch außen eine Zahnung tragen, stellt dies eine besonders griffige, profilierte Oberflächengestaltung der unteren Transportbänder 35 dar, wodurch in der Regel Schlupf zwischen den Untertrumen 76 und dem darunter befindlichen, abstützenden Stückgut 1 ausgeschlossen ist. Die Untertrume 76 werden außerdem durch an dem Rahmen 20 befestigte Führungskufen 89 in einer gemeinsamen Ebene gehalten, so daß großflächiger Kontakt zwischen den Untertrumen 76 und dem darunter befindlichen Stückgut 1 oder Boden gewährleistet ist.

In Fig. 5 ist das obere Transportband 33 auch als oberes Transportelement 90 bezeichnet, während das untere Transportband 35 auch als unteres Transportelement 91 bezeichnet ist. Die Obertrume 75 der oberen Transportelemente 90 definieren eine obere Transportfläche 92. In ähnlicher Weise definieren die Untertrume 76 der unteren Transportelemente 91 eine untere Transportfläche 93. Bedingung für eine sachgerechte Funktion ist, daß die oberen Transportelemente 90 die untere Transportfläche 93 weder berühren noch durchdringen, und daß die unteren Transportelemente 91 die obere Transportfläche 92 weder berühren noch durchdringen.

In allen Zeichnungsfiguren sind gleiche Teile mit gleichen Bezugszahlen versehen.

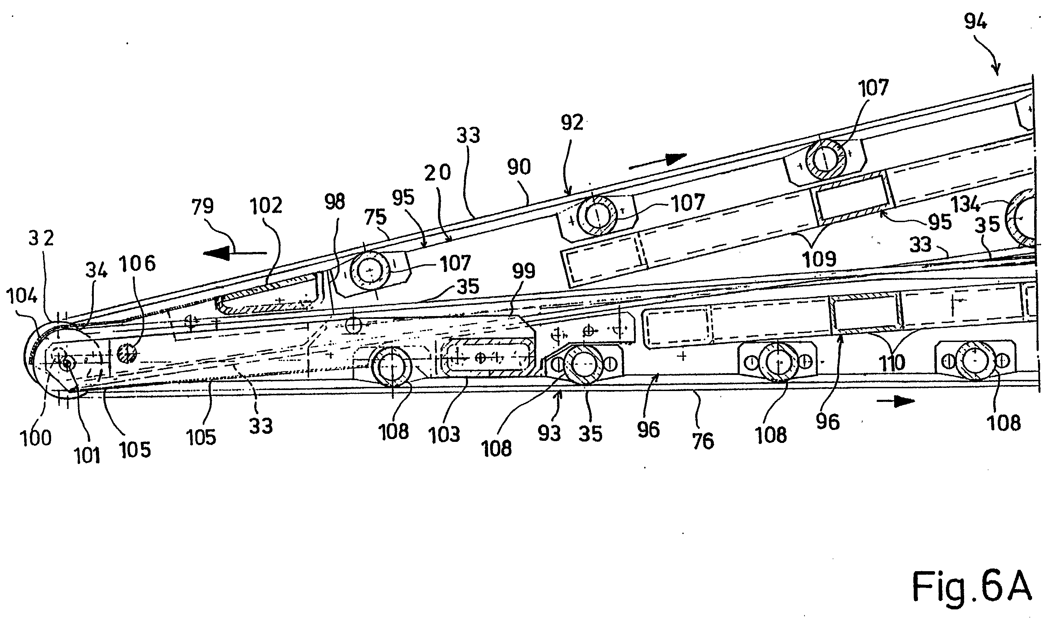

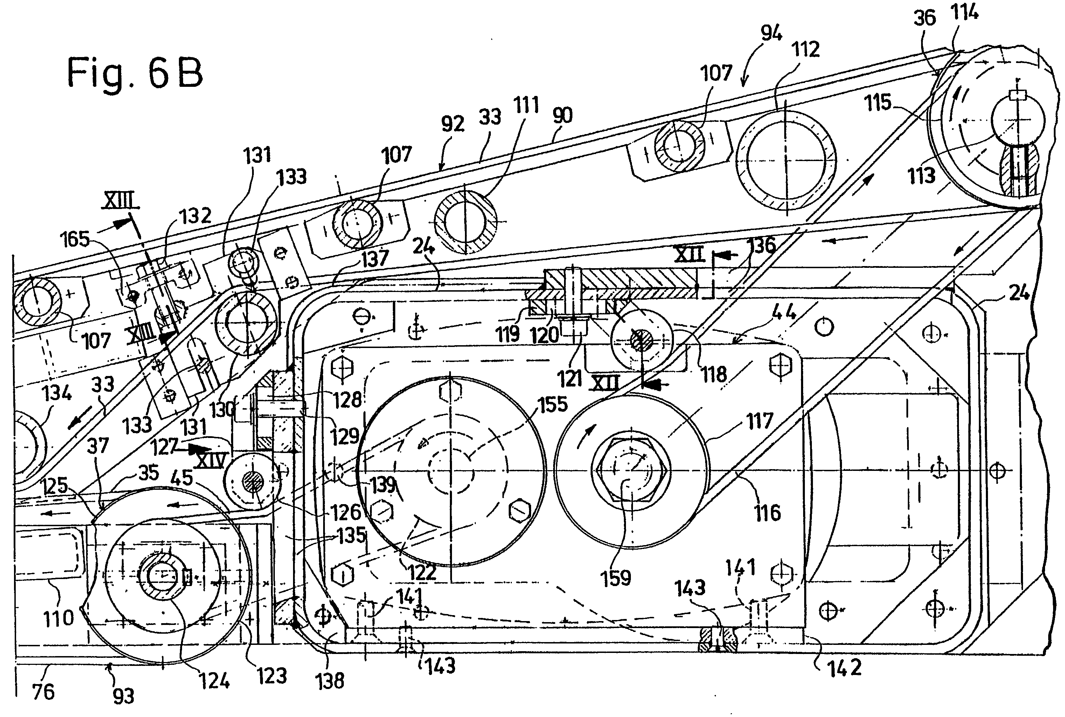

Fig. 6 zeigt einen Aufnehmer 94, bei dem der Rahmen 20 einen oberen Rahmenteil 95 und einen unteren Rahmenteil 96 aufweist.

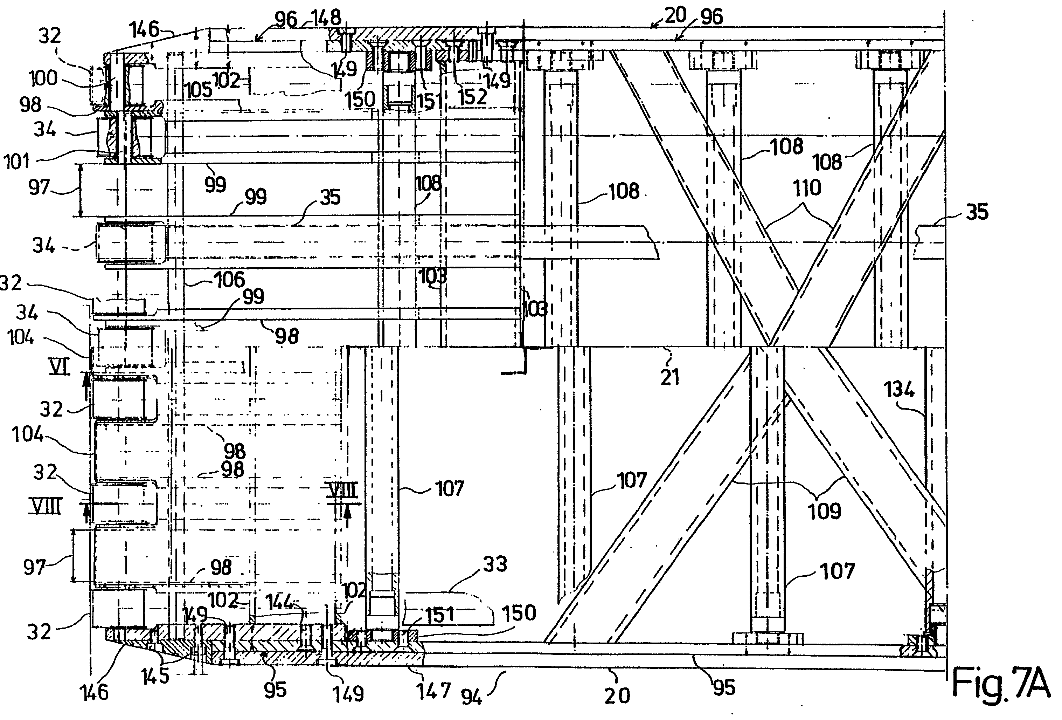

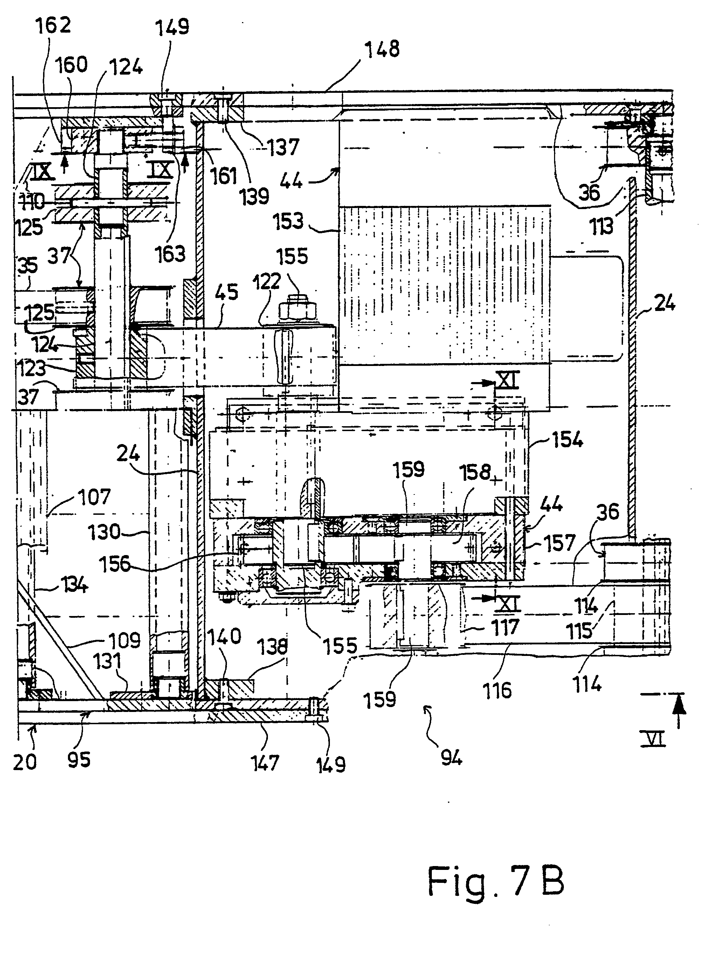

Jeder Rahmenteil 95, 96 weist vorne, also an seiner dem aufzunehmenden Stückgut zugewandten Seite, sich nach vorne hin erstreckende, in seitlichem Abstand 97 voneinander angeordnete Finger 98 und 99 auf. Alle Finger 98, 99 sind vorne gegabelt. Jeder Finger 98 trägt vorne auf einer Achse 100 frei drehbar eine der Umlenkrollen 32 für eines der oberen Transportbänder 33. In ähnlicher Weise trägt jeder Finger 99 in seinem vorderen gegabelten Ende auf einer Achse 101 frei drehbar eine der Umlenkrollen 34 für eines der unteren Transportbänder 35 (s. auch Fig. 7). Alle Finger 98 sind hinten an einer kräftigen Traverse 102 des oberen Rahmenteils 95 angeschweißt. Desgleichen sind alle Finger 99 an einer kräftigen Traverse 103 des unteren Rahmenteils 96 angeschweißt.

Die Finger 98 des oberen Rahmenteils 95 erstrecken sich in die seitlichen Abstände 97 zwischen den Fingern 99 des unteren Rahmenteils 96 und umgekehrt (Fig. 7). Dabei ist die Anordnung so getroffen, daß die Umlenkrollen 32 etwas nach vorne und oben über obere Abdeckbleche 104 der unteren Umlenkrollen 34 hinausragen. Gleichzeitig ragen die unteren Umlenkrollen 34 etwas nach unten über untere Abdeckbleche 105 der oberen Umlenkrollen 32 hinaus. Die Abdeckbleche 104 haben den Zweck, das aufzunehmende Stückgut vor den gegenläufigen Obertrumen der unteren Transportbänder 35 abzuschirmen. In ähnlicher Weise wird die Unterlage unter dem aufzunehmenden Stückgut durch die unteren Abdeckbleche 105 gegenüber den gegenläufigen Untertrumen der oberen Transportbänder 33 abgeschirmt. Die Abdeckbleche 104, 105 sind jeweils an den zugehörigen Fingern 98, 99 befestigt, z.B. angeschweißt.

Kurz hinter den Umlenkrollen 32, 34 erstreckt sich quer durch alle Finger 98, 99 hindurch ein Bolzen 106. Der Bolzen 106 positioniert zum einen die Umlenkrollen 32, 34 relativ zueinander und unterbindet eine Torsionsbeanspruchung der Traversen 102, 103.

In gewissen Abständen sind in Längsrichtung des oberen Rahmenteils 95 Stützwalzen 107 für die Obertrume 75 der oberen Transportbänder 33 frei drehbar an dem oberen Rahmenteil 95 gelagert. Entsprechend sind in gewissen Abständen in Längsrichtung an dem unteren Rahmenteil 96 sich ebenfalls quer erstreckende Stützwalzen 108 für die Untertrume 76 der unteren Transportbänder 35 frei drehbar an dem unteren Rahmenteil 96 gelagert. Zwischen den Stützwalzen 107, 108 befinden sich ein versteifendes Rohrgitter 109 des oberen Rahmenteils 95 und ein versteifendes Rohrgitter 110 des unteren Rahmenteils 96. Der obere Rahmenteil 95 ist nach hinten hin über die Traverse 24 hinaus verlängert und dort durch rohrförmige Traversen 111 und 112 versteift.

Am hinteren Ende ist oben in dem oberen Rahmenteil 95 eine Welle 113 der ersten Antriebswalze 36 drehbar gelagert. Jedem oberen Transportband 33 ist eine Treibscheibe 114 der ersten Antriebswalze 36 zugeordnet. An der Welle 113 ist auch eine Riemenscheibe 115 für einen Riemen 116 befestigt, der in Richtung der in Fig. 6 eingetragenen Pfeile durch eine Treibscheibe 117 des Antriebs 44 angetrieben wird. Der Riemen 116 wird durch eine Spannrolle 118 gespannt, die an einem Schlitten 119 drehbar gelagert ist. Der Schlitten 119 ist mit sich in Längsrichtung erstreckenden Langlöchern 120 versehen, durch die hindurch sich jeweils eine Feststellschraube 121 in eine Gewindebohrung der Traverse
24 erstreckt.

Der Antrieb 44 weist noch eine weitere Treibscheibe 122 für den Riemen 45 auf, die sich gemäß
den in Fig. 6 eingetragenen Pfeilen in entgegengesetzter Richtung wie die Treibscheibe 117 dreht. Der
Riemen 45 treibt eine Riemenscheibe 123, die auf einer Welle 124 befestigt ist. Die Welle 124 erstreckt
sich quer und ist in dem unteren Rahmenteil 96 gelagert. Die Welle 124 treibt Treibscheiben 125 der
zweiten Antriebswalze 37 für jeweils eines der unteren Transportbänder 35.

Der Riemen 45 wird durch eine Spannrolle 126 gespannt, die in senkrechter Richtung zustellbar an einem Schlitten 127 drehbar gelagert ist. Der Schlitten
weist senkrechte Langlöcher 128 auf, durch die sich
jeweils eine Feststellschraube 129 in eine Gewindebohrung der Traverse 24 erstreckt.

Die Spannung der unteren Transportbänder 35
wird dadurch eingestellt, daß die Welle 124 in Längsrichtung eingestellt wird. Einzelheiten dazu werden
im Zusammenhang mit den Fig. 7 und 9 beschrieben
werden.

Die von der ersten Antriebswalze 36 kommenden
Untertrume der oberen Transportbänder 35 laufen
zunächst frei über die Traverse 24 hinweg nach
vorne bis zu einer sich quer erstreckenden Spannwalze 130, die an jedem seitlichen Ende drehbar an
einem Schlitten 131 gelagert ist. Jeder Schlitten 131
ist durch eine Stellschraube 132 relativ zu dem oberen Rahmenteil 95 verschiebbar und in der gewünschten Spannstellung durch in das obere Rahmenteil 95 eingedrehte Feststellschrauben 133 fixierbar. Von der Spannwalze 130 laufen die
Untertrume der oberen Transportbänder 33 weiter
über eine sich quer erstreckende Umlenkwalze 134,
die an dem oberen Rahmenteil 95 frei drehbar gelagert ist.

Der Riemen 45 läuft durch ein Fenster 135 in der
Traverse 24, und der Riemen 116 läuft durch ein weiteres Fenster 136 in der Traverse 24. Die Traverse
24 weist an jeder Seite einen kräftigen Stirnring 137
und 138 (Fig. 7) auf, der mit Schrauben 139 und 140
an den Rahmenteilen 95, 96 lösbar befestigt ist. Der
Antrieb 44 ist mit Schrauben 141 an einer Bodenplatte 142 befestigt, die ihrerseits durch Schrauben 143
an der Traverse 24 festgelegt ist.

Fig. 7 zeigt oberhalb der Längsebene 21 eine teilweise geschnittene Ansicht auf den unteren Rahmenteil 96. In Fig. 7 ist unterhalb der Längsebene 21
im wesentlichen eine teilweise geschnittene Draufsicht auf den oberen Rahmenteil 95 dargestellt.

Der in Fig. 7 unterste Finger 98 ist durch Schrauben 144 mit dem oberen Rahmenteil 95 verschraubt.
In ähnlicher Weise ist der in Fig. 7 oberste Finger
98 mit dem oberen Rahmenteil 95 verschraubt. Diese beiden äußersten Finger 98 tragen jeweils außen
und vorne mit Schrauben 145 ein sich nach vorne
verjüngendes Keilstück 146, das die Handhabung
des Aufnehmers 94 erleichtert.

Auf der gesamten Länge des Aufnehmers 94 erstrecken sich auf jeder Seite außerhalb der Rahmenteile 95, 96 durchgehende Seitenplatten 147 und
148, die durch Schrauben 149 jeweils mit beiden Rahmenteilen 95, 96 zu dem übergeordneten Rahmen 20
lösbar verbunden sind.

Jede Stützwalze 107, 108 ist in einer Lagerplatte
150 gelagert, die mit Schrauben 151 entweder an dem
oberen Rahmenteil 95 oder an dem unteren Rahmenteil 96 festgelegt ist. Auch die Traverse 103 ist
durch Schrauben 152 lösbar an dem unteren Rahmenteil 96 befestigt.

Der Antrieb 44 ist innerhalb der Traverse 24 untergebracht und weist einen Elektromotor 153 mit einem daran angeflanschten Untersetzungsgetriebe
154 auf. Die Einheit 153, 154 wird z.B. als sogenannter Flachgetriebemotor durch die Firma Carl Bockwoldt, Getriebemotorenwerk, Sehmsdorfer Str. 43-
53, D-2060 Bad Oldesloe, geliefert. Eine Abtriebswelle 155 des Untersetzungsgetriebes 154 treibt einerseits die Treibscheibe 122 und andererseits ein
Zahnrad 156 eines Umkehrgetriebes 157. Das Zahnrad 156 kämmt mit einem gleichen Zahnrad 158 des
Umkehrgetriebes 157. Das Zahnrad 158 treibt eine
Abtriebswelle 159 des Umkehrgetriebes 157. Auf
der Abtriebswelle 159 ist die Treibscheibe 117 befestigt. So drehen sich also die Treibscheiben 117, 122
mit gleicher Drehzahl aber in entgegengesetzten
Richtungen.

Gemäß Fig. 7 ist die Welle 124 an beiden seitlichen Enden in gleicher Weise in einem Schlitten 160
drehbar gelagert. Jeder Schlitten kann in Längsrichtung durch eine Stellschraube 161 relativ zu dem
unteren Rahmenteil 96 eingestellt werden und ist dabei in einer Gleitführung 162 des unteren Rahmenteils 96 geführt. Die Stellschraube 161 stützt sich an
einer Konsole 163 des unteren Rahmenteils 96 ab.
Die gewünschte Spannstellung der Welle 124 wird
schließlich durch Feststellschrauben 164 (Fig. 9) fixiert.

Fig. 8 zeigt Einzelheiten eines der Finger 98 des
oberen Rahmenteils 95 und mit dem Finger 98 zusammenwirkende Elemente.

Fig. 9 zeigt Einzelheiten der Spannvorrichtung
für die Welle 124 in anderer Ansicht als Fig. 7.

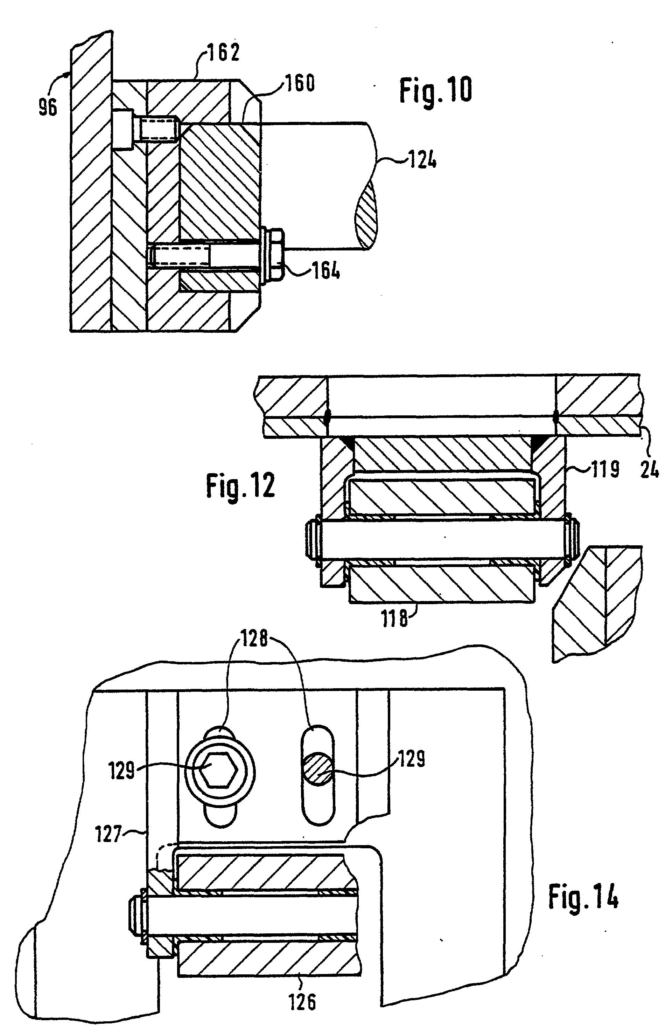

Fig. 10 sind weitere Einzelheiten der Spannvorrichtung gemäß Fig. 9 zu entnehmen.

Fig. 11 zeigt Einzelheiten der Montage des Antriebs 44 an der Bodenplatte 142 und deren Montage an der Traverse 24.

Aus Fig. 12 sind Einzelheiten der Spannrolle 118
sowie ihrer Anordnung und Betätigung ersichtlich.

In Fig. 13 ist die Stellschraube 132 an einer Konsole 165 (s. auch Fig. 6) abgestützt, die an den unteren
Rahmenteil 96 angeschraubt ist.

Fig. 14 sind weitere Einzelheiten der Spannrolle
126 und ihrer Anordnung zu entnehmen.

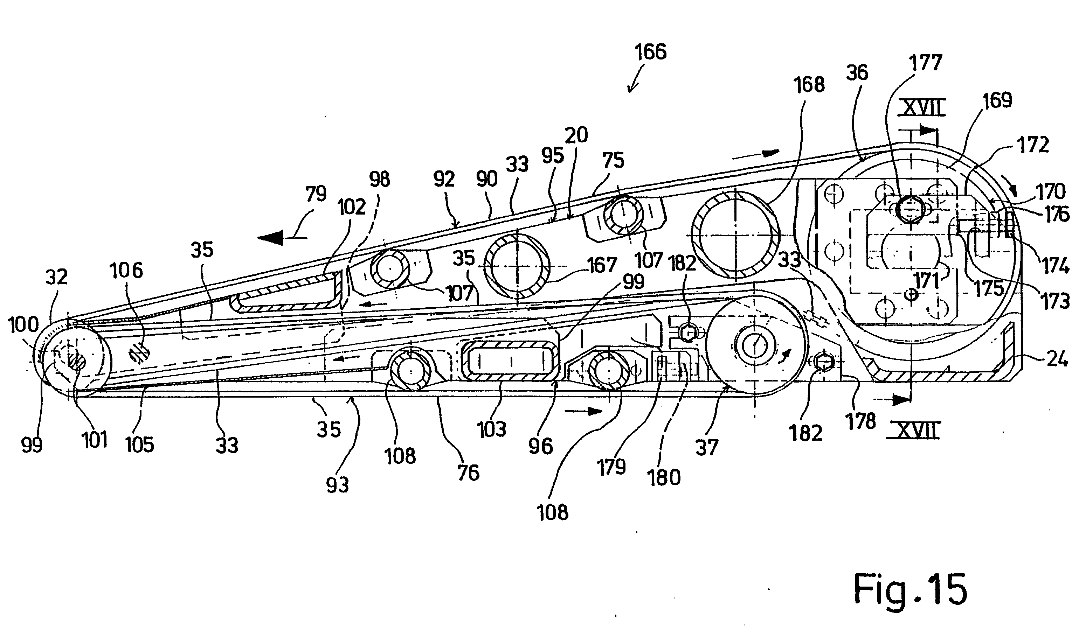

In den Fig. 15 bis 17 ist ein Aufnehmer 166 anderer
Ausführung dargestellt.

Bei dem Aufnehmer 166 ist der Rahmen 20 prinzipiell gleich ausgebildet wie bei dem Aufnehmer 94
gemäß den Fig. 6 bis 14. Insgesamt ist jedoch der
Aufnehmer 166 relativ kurz gebaut. Der obere Rahmenteil 95 ist daher mit ausreichender Steifigkeit
nur durch rohrförmige Traversen 167 und 168 versteift.

Die erste Antriebswalze 36 ist an einem äußeren
Rotor 169 eines Trommelmotors 170 ausgebildet.
Derartige Trommelmotoren liefert z.B. die Firma Interroll Fördertechnik GmbH + Co. KG, D-5632 Wermelskirchen. Der Trommelmotor 170 ist auf jeder Seite mit einer feststehenden Achse 171 in einem in Längsrichtung des Aufnehmers 166 bewegbaren Schlitten 172 gelagert. In eine hintere Gewindebohrung 173 des Schlittens 172 ist eine Stellschraube 174 eingeschraubt, die sich an einer Gleitführung 175 des Rahmens 20 abstützt. Ist die gewünschte Spannstellung des Schlittens 172 erreicht, wird die Stellschraube 174 mit einer Kontermutter 176 gekontert und der Schlitten 172 mit Feststellschrauben 177 fixiert.

Zumindest die oberen Transportbänder 33 sind auf gegenüberliegenden Seiten mit Zähnen versehen. Die inneren Zähne stehen mi Eingriff mit einer komplementären Zahnung der ersten Antriebswalze 36, während die äußeren Zähne der oberen Transportbänder 33 in eine komplementäre Zahnung der zweiten Antriebswalze 37 eingreifen und diese antreiben. Die zweite Antriebswalze 37 ist zur Einstellung der Spannung in den unteren Transportbändern 35 ebenfalls in einem in Längsrichtung verstellbaren Schlitten 178 drehbar gelagert. An jedem Ende der zweiten Antriebswalze 37 ist ein solcher Schlitten 178 vorgesehen. Mit jedem Schlitten 178 steht eine Stellschraube 179 in Berührung, die in eine Gewindebohrung 180 einer Konsole 181 des unteren Rahmenteils 96 eingeschraubt ist. Sobald die gewünschte Spannung der unteren Transportbänder 35 erreicht ist, wird jeder Schlitten 178 durch Feststellschrauben 182 fixiert.

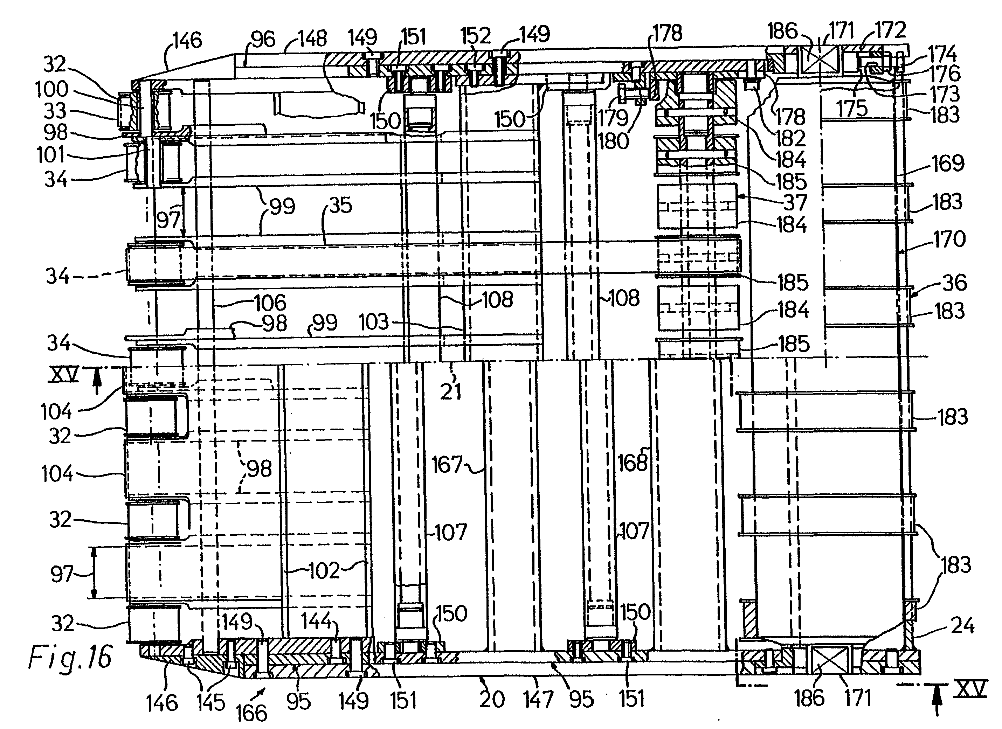

In Fig. 16 bietet der untere Teil unterhalb der Längsebene 21 im wesentlichen eine Draufsicht auf den oberen Rahmenteil 95, während in Fig. 16 der Teil oberhalb der Längsebene 21 im wesentlichen eine Draufsicht auf den unteren Rahmenteil 96 darstellt.

Auf dem Rotor 169 des Trommelmotors 170 sind in axialen Abständen Treibscheiben 183 für die oberen Transportbänder 33 befestigt. Auf der zweiten Antriebswalze 37 fluchten mit den Treibscheiben 183 in Längsrichtung Mitnahmescheiben 184 für die oberen Transportbänder 33. Die Mitnahmescheiben 184 sind auf der zweiten Antriebswalze 37 befestigt. Im Wechsel mit den Mitnahmescheiben 184 sind auf der zweiten Antriebswalze 37 außerdem Treibscheiben 185 für die unteren Transportbänder 35 befestigt.

Die Achse 171 ist an jedem Ende durch gegenüberliegende Schlüsselflächen 186 vor Drehung gegenüber dem Rahmen 20 gesichert.

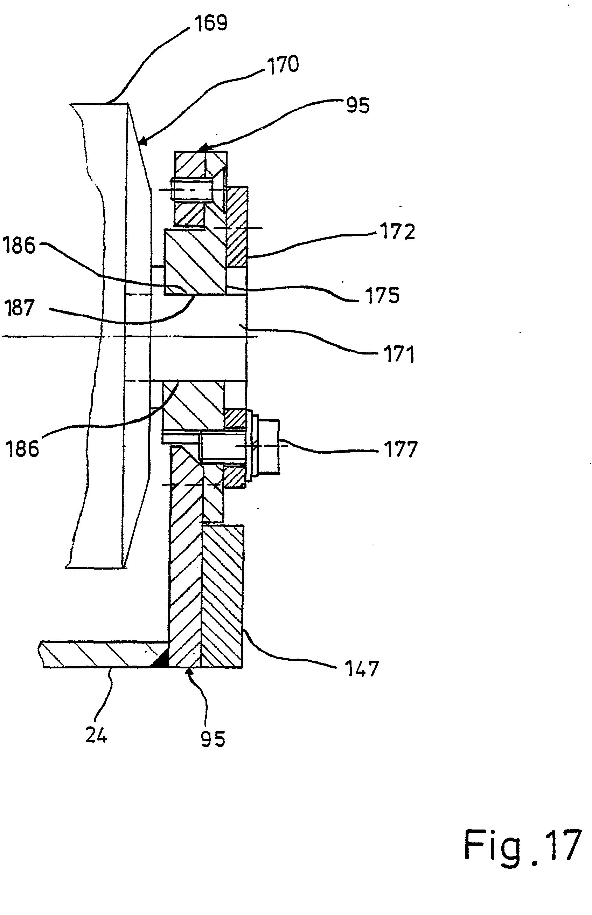

In Fig. 17 ist erkennbar, daß die Schlüsselflächen 186 in einem komplementären Schlitz 187 der Gleitführung 175 anliegen.

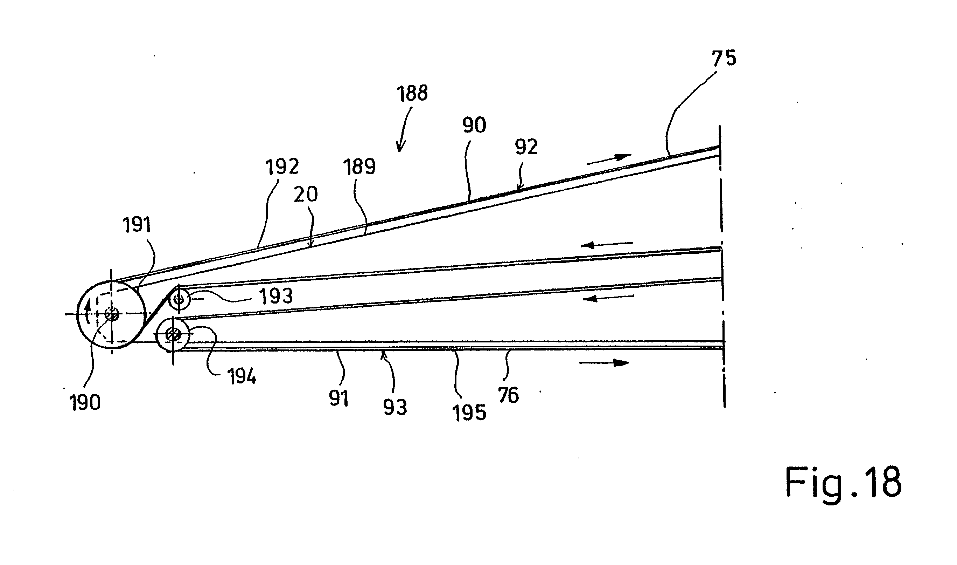

Bei dem Ausführungsbeispiel nach Fig. 18 weist ein Aufnehmer 188 einen Rahmen 20 auf, der nicht wie den beiden zuvor geschilderten Ausführungsbeispielen in einen oberen und einen unteren Rahmenteil unterteilt ist. Vielmehr besteht der Rahmen 20 aus jeweils außen angeordneten Seitenplatten 189, die in nicht gezeichneter, geeigneter Weise durch Traversen miteinander verbunden und versteift sind. Auch das hintere Ende des Aufnehmers 188 ist in Fig. 18 nicht gezeichnet und kann in beliebiger Kombination entsprechend den zuvor geschilderten Ausführungsbeispielen ausgestaltet werden.

Am vorderen Ende des Rahmens 20 ist auf einer sich über die gesamte Breite erstreckenden Achse 190 eine ebenfalls über die gesamte Breite des Aufnehmers 188 reichende erste Umlenkwalze 191 frei drehbar gelagert. Über die erste Umlenkwalze 191 ist in diesem Fall nur ein einziges oberes Transportelement 90 in Gestalt eines über die gesamte Breite des Aufnehmers 188 reichenden oberen Transportbandes 192 geführt. Der Untertrum des oberen Transportbands 192 ist unmittelbar hinter der ersten Umlenkwalze 191 über eine höher an dem Rahmen 20 gelagerte zweite Umlenkwalze 193 geführt. Auch die zweite Umlenkwalze 193 erstreckt sich über die gesamte Breite des Aufnehmers 188.

Unterhalb der zweiten Umlenkwalze 193 erstreckt sich über die gesamte Breite des Aufnehmers 188 eine dritte Umlenkwalze 194, über die als unteres Transportelement 91 in diesem Fall ebenfalls nur ein einiges unteres Transportband 195 geführt ist, daß sich über die gesamte Breite des Aufnehmers 188 erstreckt. Dank der zweiten Umlenkwalze 193 liegt also das gesamte untere Transportband 195 unterhalb des Untertrums des oberen Transportbands 192.

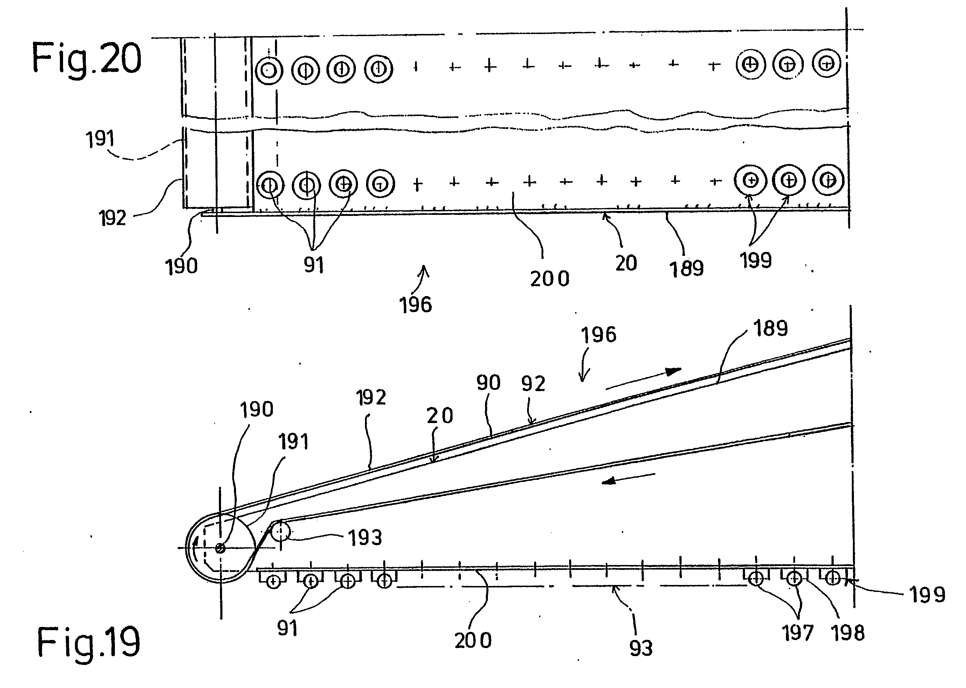

Die Fig. 19 und 20 zeigen in ähnlich schematisierter Weise wie Fig. 18 einen weiteren Aufnehmer 196. Die untere Transportfläche 93 wird hier durch die untersten Punkte von Kugeln 197 definiert, die frei drehbar in Gehäusen 198 von sogenannten Kugelrollen 199 gelagert sind. Solche Kugelrollen liefert z. B. die Firma Interroll Fördertechnik GmbH + Co. KG, D-5632 Wermelskirchen.

Die Kugelrollen 199 sind, wie Fig. 20 andeutet, über die Unterseite einer Bodenplatte 200 verteilt, die den unteren Abschluß des Rahmens 20 bildet. Die Kugelrollen 199 gestatten ein reibungsarmes Eindringen des Aufnehmers 196 in den Spalt unter dem aufzunehmenden Stückgut.

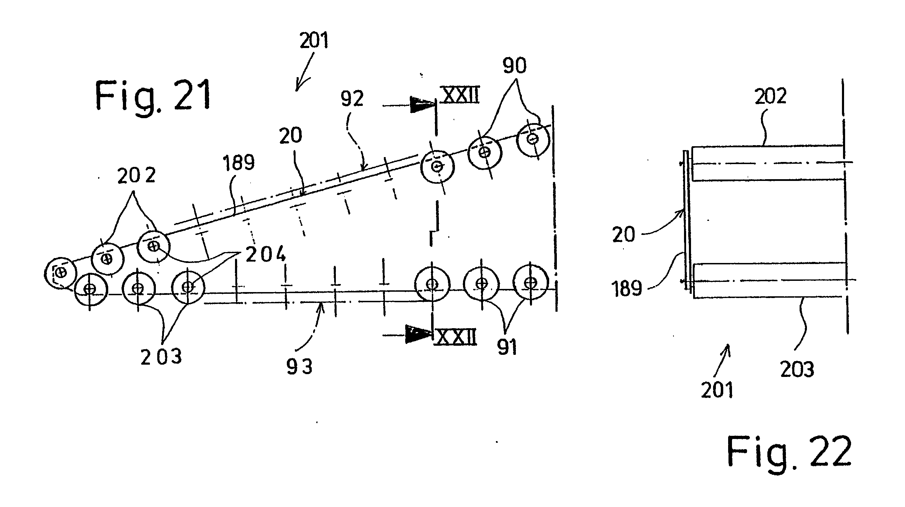

Die Fig. 21 und 22 zeigen in wiederum schematischer Weise das vordere Ende eines Aufnehmers 201. Hier sind in den äußeren, gegenüberliegenden Seitenplatten 189 sich quer zur Längsrichtung des Aufnehmers 201 erstreckende obere Transportwalzen 202 und untere Transportwalzen 203 jeweils auf einer sich über die gesamte Breite des Aufnehmers 201 erstreckenden Achse 204 frei drehbar gelagert. Die Transportwalzen 202, 203 können sich jeweils über die gesamte Breite des Aufnehmers oder nur über einen Teil dieser Breite erstrecken. Es können auch auf jeder Achse 204 axial im Abstand voneinander mehrere obere oder untere Transportwalzen 202, 203 angeordnet sein. Die obere Transportfläche 92 und die untere Transportfläche 93 werden in diesem Fall durch die äußersten Mantellinien der Transportwalzen 202, 203 definiert. Der Aufnehmer 201 wird durch das in den Fig. 21 und 22 nicht gezeichnete Manövriergerät in den Spalt unter dem aufzunehmenden Stückgut gedrückt, wobei sich die Transportwalzen 202, 203 reibungsarm oben an dem aufzunehmenden Stückgut und unten an der Unterlage abwälzen.

Die in den verschiedenen Ausführungsbeispielen erläuterten oberen Transportelemente 90 und unteren Transportelemente 91 können in beliebiger, geeigneter Kombination an einem Aufnehmer eingesetzt werden.

Die in den Fig. 6 bis 22 dargestellten Aufnehmer können ebenfalls mit Führungsschienen entsprechend den Führungsschienen 22, 23 bei dem Aufnehmer 5 und mit den zugehörigen Einrichtungen zur Längsbewegung des Aufnehmers ausgerüstet sein.

**Patentansprüche**

1. Vorrichtung zum Aufnehmen von Stückgütern (1), mit einem durch ein Manövriergerät (9) getragenen, unter ein aufzunehmendes Stückgut (1) bewegbaren Aufnehmer (5; 94; 166; 188; 196; 201; 205; 222), wobei der Aufnehmer (5; 94; 166; 188; 196; 201; 205; 222) einen Rahmen (20) aufweist, wobei in dem Rahmen (20) wenigstens ein mit dem aufzunehmenden Stückgut (1) zusammenwirkendes oberes Transportelement (90) bewegbar gelagert ist, wobei das wenigstens eine obere Transportelement (90) eine obere Transportfläche (92) definiert, wobei in dem Rahmen (20) außerdem wenigstens ein mit einer Unterlage unter dem aufzunehmenden Stückgut (1) zusammenwirkendes unteres Transportelement (91) bewegbar gelagert ist, wobei das wenigstens eine untere Transportelement (91) eine untere Transportfläche (93) definiert, dadurch gekennzeichnet, daß das wenigstens eine obere Transportelement (90) und das wenigstens eine untere Transportelement (91) zumindest an einem dem aufzunehmenden Stückgut (1) zugewandten Ende der Vorrichtung ineinandergeschachtelt sind, und daß die obere Transportfläche (92) sich in Richtung des aufzunehmenden Stückguts (1) über die untere Transportfläche (93) hinaus erstreckt.

2. Vorrichtung nach Anspruch 1, dadurch gekennzeichnet, daß die Transportflächen (92, 93) zumindest an ihrem dem aufzunehmenden Stückgut (1) zugewandten Ende, ausgehend von diesem Ende, divergieren.

3. Vorrichtung nach Anspruch 1 oder 2, dadurch gekennzeichnet, daß der Rahmen (20) einen das wenigstens eine obere Transportelement (90) aufnehmenden, oberen Rahmenteil (95) und einen das wenigstens eine untere Transportelement (91) aufnehmenden, unteren Rahmenteil (96) aufweist, und daß die Rahmenteile (95, 96) durch Verbindungsmittel lösbar miteinander verbunden sind.

4. Vorrichtung nach Anspruch 3, dadurch gekennzeichnet, daß die Verbindungsmittel an dem dem aufzunehmenden Stückgut (1) zugewandten Ende des Rahmens (20) einen sich quer durch Aufnahmeöffnungen der Rahmenteile durch die Rahmenteile (95, 96) hindurch erstreckenden Bolzen (106) aufweisen.

5. Vorrichtung nach Anspruch 3 oder 4, dadurch gekennzeichnet, daß die Verbindungsmittel auf jeder Seite außerhalb der Rahmenteile (95, 96) eine durchgehende Seitenplatte (147, 148) aufweisen, und daß jedes Rahmenteil (95, 96) lösbar an den beiden Seitenplatten (147, 148) befestigt ist.

6. Vorrichtung nach Anspruch 5, dadurch gekennzeichnet, daß an dem von dem aufzunehmenden Stückgut (1) abgewandten Ende des Rahmens (20) eine mit den Rahmenteilen (95, 96) verbundene Traverse (24) vorgesehen ist.

7. Vorrichtung nach Anspruch 6, dadurch gekennzeichnet, daß sich zumindest die obere Transportfläche (92) in Längsrichtung des Aufnehmers über die Traverse (24) hinaus erstreckt.

8. Vorrichtung nach Anspruch 6 oder 7, dadurch gekennzeichnet, daß in einem von der Traverse (24) umschlossenen Hohlraum wenigstens ein Antrieb (44) für das wenigstens eine obere Transportelement (90) und/oder für das wenigstens eine untere Transportelement (91) angeordnet ist.

9. Vorrichtung nach Anspruch 6 oder 7, dadurch gekennzeichnet, daß im Bereich der Traverse (24) ein sich quer zur Längsrichtung des Aufnehmers erstreckender, an dem Rahmen (20) montierter Antrieb (170) für die Transportelemente (90, 91) vorgesehen ist.

10. Vorrichtung nach einem der Ansprüche 1 bis 9, dadurch gekennzeichnet, daß das wenigstens eine obere Transportelement (90) und/oder das wenigstens eine untere Transportelement (91) als Transportband (33, 192; 35, 195) ausgebildet ist, wobei jedes Transportband parallel zu einer senkrechten Längsebene (21) des Aufnehmers angeordnet ist, daß der Obertrum (75) jedes oberen Transportbandes (33; 192) in der gleichen Richtung wie der Untertrum (76) jedes unteren Transportbandes (35; 195) antreibbar ist, wobei der Obertrum (75) jedes oberen Transportbandes (33; 192) in der oberen Transportfläche (92) und der Untertrum (76) jedes unteren Transportbandes (35; 195) in der unteren Transportfläche (93) liegen, und daß das wenigstens eine obere Transportband (33) über eine das wenigstens eine obere Transportband (33) antreibende erste Antriebswalze (36) und über eine durch das wenigstens eine obere Transportband (33) antreibbare, das wenigstens eine untere Transportband (35) antreibende zweite Antriebswalze (37) geführt ist.

11. Vorrichtung nach Anspruch 10, dadurch gekennzeichnet, daß die Transportbänder (33, 35) als Zahnbänder ausgebildet sind, deren Zähne mit einer komplementären Zahnung der Antriebswalzen (36, 37) im Eingriff stehen, und daß zumindest die oberen Transportbänder (33) auf gegenüberliegenden Seiten mit Zähnen versehen sind.

12. Vorrichtung nach Anspruch 10 oder 11, dadurch gekennzeichnet, daß die erste Antriebswalze (36) an einem äußeren Rotor (169) eines Trommelmotors (170) ausgebildet ist, und daß eine Achse (171) des Trommelmotors (170) an dem Rahmen (20) befestigt ist.

13. Vorrichtung nach einem der Ansprüche 1 bis 9, dadurch gekennzeichnet, daß das wenigstens eine obere Transportelement (90) und/oder das wenigstens eine untere Transportelement (91) als Transportband (33, 192; 35, 195) ausgebildet ist, wobei jedes Trasnportband parallel zu einer senkrechten Längsebene (21) des Aufnehmers angeordnet ist, daß der Obertrum (75) jedes oberen Transportbandes (33; 192) in der gleichen Richtung wie der Untertrum (76) jedes unteren Transportbandes (35; 195) antreibbar ist, wobei der Obertrum (75) jedes oberen Transportbandes (33; 192) in der oberen Transportfläche (92) und der Untertrum (76) jedes unteren Transportbandes (35; 195) in der unteren Transportfläche (93) liegen, daß das wenigstens eine obere Transportband (33) über eine das wenigstens eine obere Transportband (33) antreibende erste Antriebswalze (36) geführt ist, daß das wenigstens eine untere Transportband (35) über eine das wenigstens eine untere Transportband (35) antreibende zweite Antriebswalze (37) geführt ist, und daß die Antriebswalzen (36, 37) durch einen Antrieb (44) in entgegengesetzten Drehrichtungen antreibbar sind.

14. Vorrichtung nach einem der Ansprüche 10 bis 13, dadurch gekennzeichnet, daß zur Spannung der Transportbänder (33; 35) wenigstens eine der Antriebswalzen (36; 37) relativ zu dem Rahmen (20) einstellbar ist.

15. Vorrichtung nach einem der Ansprüche 10 bis 13, dadurch gekennzeichnet, daß der Rahmen (20) an seiner dem aufzunehmenden Stückgut (1) zugewandten Seite einen in Längsrichtung relativ zu dem Rest des Rahmens (20) zur Spannung der Transportbänder (33, 35) einstellbaren, Umlenkrollen (32, 34) für die Transportbänder (33, 35) tragenden Umlenkkopf (26) aufweist.

16. Vorrichtung nach einem der Ansprüche 10 bis 15, dadurch gekennzeichnet, daß die Transportelemente (90; 91) jeweils als eine Anzahl obere (33) und untere Transportbänder (35) ausgebildet sind, und daß an dem Rahmen (20) an seiner dem aufzunehmenden Stückgut (1) zugewandten Seite Umlenkrollen (32; 34) für die Transportbänder (33; 35) derart gelagert sind, daß die Umlenkrollen (32) der oberen Transportbänder (33) in seitliche Abstände zwischen den Umlenkrollen (34) der unteren Transportbänder (35) eingreifen und umgekehrt.

17. Vorrichtung nach einem der Ansprüche 3 bis 14, dadurch gekennzeichnet, daß jeder Rahmenteil (95; 96) an seiner dem aufzunehmenden Stückgut (1) zugewandten Seite sich zu dem aufzunehmenden Stückgut (1) hin erstreckende, in seitlichem Abstand (97) voneinander angeordnete, jeweils eine Umlenkrolle (32; 34) für ein zugehöriges, als Transportband (33; 35) ausgebildetes Transportelement (90; 91) tragende Finger (98; 99) aufweist, und daß die Finger (98) des oberen Rahmenteils (95) in die seitlichen Abstände (97) zwischen den Fingern (99) des unteren Rahmenteils (96) eingreifen und umgekehrt.

18. Vorrichtung nach einem der Ansprüche 10 bis 15, dadurch gekennzeichnet, daß bei Verwendung nur eines einzigen oberen Transportbandes (192) das obere Transportband (192) über eine gegenüber dem aufzunehmenden Stückgut (1) an dem Rahmen (20) gelagerte erste Umlenkwalze (191) geführt ist, und daß der Untertrum des oberen Transportbandes (192) unmittelbar neben der ersten Umlenkwalze (191) über eine höhere an dem Rahmen (20) gelagerte zweite Umlenkwalze (193) geführt ist, und daß unterhalb der zweiten Umlenkwalze (193) und neben der ersten Umlenkwalze (191) das wenigstens eine untere Transportelement (91, 195; 91, 199) beginnt.

19. Vorrichtung nach einem der Ansprüche 1 bis 10, 14 und 18, dadurch gekennzeichnet, daß zumindest einige der Transportelemente (91) als Kugelrollen (199) ausgebildet sind.

20. Vorrichtung nach einem der Ansprüche 1 bis 10, 14 und 18, dadurch gekennzeichnet, daß zumindest einige der Transportelemente (90; 91) als sich quer zur Längsrichtung des Aufnehmers erstreckende, an dem Rahmen (20) drehbar gelagerte Transportwalzen (202; 203) ausgebildet sind.

21. Vorrichtung nach einem der Ansprüche 1 bis 20, dadurch gekennzeichnet, daß der Rahmen (20) an gegenüberliegenden Längsseiten jeweils eine sich parallel zu der Längsebene (21) erstreckende Führungsschiene (22, 23) aufweist, und daß mit jeder Führungsschiene (22, 23) wenigstens zwei Tragrollen (50) des Aufnehmers (5) im Eingriff stehen.

22. Vorrichtung nach Anspruch 21, dadurch gekennzeichnet, daß an dem Aufnehmer (5) wenigstens ein steuerbares, antreibbares Arretierelement (72) vorgesehen ist, und daß jedes Arretierelement (72) an ausgewählten Relativstellungen des Rahmens (20) und des übrigen Aufnehmers (5) in einen weitere Relativbewegung verhindernden Eingriff mit dem Rahmen (20) tritt.

23. Vorrichtung nach Anspruch 21 oder 22. dadurch gekennzeichnet, daß die Tragrollen (50) jeder Führungsschiene (22, 23) an einem Führungsstück (51, 52) drehbar gelagert sind, und daß jedes Führungsstück (51, 52) um eine waagerechte Wippachse (54) eines Halters (55) des Aufnehmers (5) wippbar ist.

24. Vorrichtung nach einem der Ansprüche 1 bis 23, dadurch gekennzeichnet, daß an dem Aufnehmer (5) in der Bewegungsbahn des aufzunehmenden Stückguts (1) eine Pendelklappe (80) angelenkt ist, durch die ein Endschalter (86) zur Ausschaltung eines Antriebs (44) der Transportelemente (33, 35) dann betätigbar ist, wenn das aufzunehmende Stückgut (1) eine Endstellung auf dem Rahmen (20) erreicht hat.

**Claims**

1. A device for picking up piece goods (1) comprising a pick-up (5; 94; 166; 188; 196; 201; 205; 222) carried by a manoeuvering device (9) and movable under an item (1) to be picked up,
wherein the pick-up (5; 94; 166; 188; 196; 201; 205; 222) comprises a frame (20),
wherein at least one upper conveying element (90), cooperating with the item (1) to be picked up, is movably mounted in the frame (20),
wherein the at least one upper conveying element (90) defines an upper conveying surface (92),
wherein also at least one lower conveying element (91), cooperating with a support under the item (1) to be picked up, is movably mounted in the frame (20),
wherein the at least one lower conveying element (91) defines a lower conveying surface (93),
characterised in that the at least one upper conveying element (90) and the at least one lower conveying element (91) are nested into each other at least at one end of the device facing towards the item (1) to be picked up, and that the upper conveying surface (92) extends out beyond the lower conveying surface (93) in the direction of the item (1) to be picked up.

2. A device according to claim 1, characterised in that the conveying surfaces (92, 93) diverge at least at their ends facing towards the item (1) to be picked up, starting from these ends.

3. A device according to claim 1 or 2, characterised in that the frame (20) features an upper frame portion (95) which accommodates the at least one upper conveying element (90), and a lower frame portion (96) which accommodates the at least one lower conveying element (91), and that the frame portions (95, 96, are releasably connected to each other by connecting means.

4. A device according to claim 3, characterised in that the connecting means at the end of the frame (20) facing towards the item (1) to be picked up comprise a bolt (106) extending traversely through the frame portions (95, 96) via accommodating holes in the frame portions.

5. A device according to claim 3 or 4, characterised in that the connecting means comprise a full-length side plate (147, 148) on each side outside the frame portions (95, 96), and that each frame portion (95, 96) is releasably secured to both the side plates (147, 148).

6. A device according to claim 5, characterised in that a cross-piece (24) connected to the frame portions (95, 96) is provided at the end of the frame (20) which is remote from the item (1) to be picked up.

7. A device according to claim 6, characterised in that at least the upper conveying surface (92) extends in the longitudinal direction of the pick-up beyond the cross-piece (24).

8. A device according to claim 6 or 7, characterised in that arranged within a hollow chamber enclosed by the crosspiece (24) is at least one drive means (44) for the at least one upper conveying element (90) and/or for the at least one lower conveying element (91).

9. A device according to claim 6 or 7, characterised in that in the area of the cross-piece (24) there is provided a drive means (170) for the conveying elements (90, 91) mounted on the frame (20) and extending transversely to the longitudinal direction of the pick-up.

10. A device according to any of claims 1 to 9, characterised in that the at least one upper conveying element (90) and/or the at least one lower conveying element (91) is formed as a conveying belt (33, 192; 35, 195), with each conveying belt being arranged parallel to a vertical longitudinal plane (21) of the pick-up, that the upper run (75) of each upper conveying belt (33; 192) is driveable in the same direction as the lower run (76) of each lower conveying belt (35; 195), with the upper run (75) of each upper conveying belt (33; 192) being arranged in the upper conveying surface (92) and the lower run (76) of each lower conveying belt (35; 195) being arranged in the lower conveying surface (93), and that the at least one upper conveying belt (33) is guided over a first driving drum (36) driving the at least one upper conveying belt (33) and over a second driving drum (37) driving the at least one lower conveying belt (35) and driveable by the at least one upper conveying belt (33).

11. A device according to claim 10, characterised in that the conveying belts (33, 35) are formed as toothed belts, the teeth of which engage with complementary toothing of the driving drums (36, 37), and in that at least the upper conveying belts (33) are provided with teeth on opposing faces.

12. A device according to claim 10 or 11, characterised in that the first driving drum (36) is provided at an external rotor (169) of a drum motor (170) and that an axle (171) of the drum motor (170) is secured to the frame (20).

13. A device according to any of claims 1 to 9, characterised in that the at least one upper conveying element (90) and/or the at least one lower conveying element (91) is formed as a conveying belt (33, 192; 35, 195), with each conveying belt being arranged parallel to a vertical longitudinal plane (21) of the pick-up, that the upper run (75) of each upper conveying belt (33; 192) is driveable in the same direction as the lower run (76) of each lower conveying belt (35; 195), with the upper run (75) of each upper conveying belt (33; 192) being arranged in the upper conveying surface (92) and the lower rung (76) of each lower conveying belt (35; 195) being arranged in the lower conveying surface (93), that the at least one upper conveying belt (33) is guided over a first driving drum (36) driving the at least one upper conveying belt (33), that the at least one lower conveying belt (35) is guided over a second driving drum (37) driving the at least one lower conveying belt (35), and that the driving drums (36, 37) are drivable in opposite directions of rotation by drive means (44).

14. A device according to any of claims 10 to 13, characterised in that at least one of the driving drums (36; 37) is adjustable relative to the frame (20) for the tensioning of the conveying belts (33; 35).

15. A device according to any of claims 10 to 13, characterised in that the frame (20) at its side facing towards the item (1) to be picked up includes a deflection head (26) which carries deflection rollers (32, 34) for the conveying belts (33, 35) and which is adjustable in the longitudinal direction relative to the rest of the frame (20) for the tensioning of the conveying belts (33, 35).

16. A device according to any of claims 10 to 15, characterised in that the conveying elements (90; 91) are each formed as a plurality of upper (33) and lower (35) conveying belts, and that deflection rollers (32; 34) for the conveying belts (33; 35) are mounted in such a way on the side of the frame (20) facing towards the item (1) to be picked up that the deflection rollers (32) of the upper conveying belts (33) engage in lateral gaps between the deflection rollers (34) of the lower conveying belts (35) and vice versa.

17. A device according to any of claims 3 to 14, characterised in that each frame portion (95; 96) at its side facing towards the item (1) to be picked up comprises fingers (98; 99) extending towards the item (1) to be picked up, the fingers being arranged with lateral spacing (97) between each other and each carrying a deflection roller (32; 34) for an associated conveying element (90; 91) formed as a conveying belt (33; 35), and that the fingers (98) of the upper frame portion (95) engage in the lateral gaps (97) between the fingers (99) of the lower frame portion (96) and vice versa.

18. A device according to any of claims 10 to 15, characterised in that, with the use of only a single upper conveying belt (192), the upper conveying belt (192) is guided over a first deflection drum (191) which is rotatably mounted on the frame (20) opposite to the item (1) to be picked up, and that the lower run of the upper conveying belt (192) is guided over a second deflection drum (193) mounted higher on the frame immediately next to the first deflection drum (191), and that the at least one lower conveying element (91, 195; 91, 199) commences below the second deflection drum (193) and next to the first deflection drum (191).

19. A device according to any of claims 1 to 10, 14 and 18, characterised in that at least some of the conveying elements (91) are formed as spherical rollers (199).

20. A device according to any of claims 1 to 10, 14 and 18, characterised in that at least some of the conveying elements (90; 91) are formed as conveying drums (202; 203) which are rotatably mounted on the frame (20) and which extend transversely to the longitudinal direction of the pick-up.

21. A device according to any of claims 1 to 20, characterised in that the frame (20) includes guide rails (22, 23) extending parallel to the longitudinal plane (21) and respectively one on opposing longitudinal sides of the frame, and in that at least two support rollers (50) of the pickup (5) are in engagement with each guide rail (22, 23).

22. A device according to claim 21, characterised in that at least one controllable, drivable arresting element (72) is provided on the pick-up (5), and in that each arresting element (72) at selected relative positions of the frame (20) and of the rest of the pick-up (5) comes into engagement with the frame (20) to prevent further relative movement.

23. A device according to claim 21 or 22, characterised in that the support rollers (50) of each guide rail (22, 23) are rotatably mounted on a guide member (51, 52), and that each guide member (51, 52) is tiltable about a horizontal tilting axis (54) of a holder (55) of the pick-up (5).

24. A device according to any of claims 1 to 23, characterised in that on the pick-up (5) in the path of movement of the item (1) to be picked up is mounted a pendulum board (80), by means of which a limit switch (86) is actuatable to switch off a drive (44) for the conveying elements (33, 35) when the item (1) to be picked up has reached an end position on the frame (20).

## Revendications

1. Dispositif permettant de lever des colis (1), équipé d'un leveur (5; 94; 166; 188; 196; 201; 205; 222) qui est porté par une installation de manoeuvre (9) et peut être mû sous un colis à lever (1), le leveur (5; 94; 166; 188; 196; 201; 205; 222) présentant un cadre (20), étant logé de manière mobile dans ce cadre (20) au moins un élément de transport supérieur (90) concourant avec le colis à lever (1), ce au moins un élément de transport supérieur (90) définissant une surface de transport supérieure (92), étant logé de manière mobile dans le cadre (20) en outre au moins un élément de transport inférieur (91) concourant avec un appui sous le colis à lever (1), ce au moins un élément de transport inférieur définissant une surface de transport inférieure (93), caractérisé en ce que l'au moins un élément de transport supérieur (90) et l'au moins un élément de transport inférieur (91) sont emboîtés au moins au bout du dispositif qui est dirigé vers le colis à lever (1), et en ce que la surface de transport supérieure (92) dépasse la surface de transport inférieure (93) vers le colis à lever (1).

2. Dispositif selon la revendication 1, caractérisé en ce que les surfaces de transport (92, 93), en partant de leur bout dirigé vers le colis à lever (1), divergent au moins à ce bout.

3. Dispositif selon la revendication 1 ou 2, caractérisé en ce que le cadre (20) présente une partie supérieure du cadre (95) portant l'au moins un élément de transport supérieur (90) et une partie inférieure du cadre (96) portant l'au moins un élément de transport inférieur (91), et en ce que les parties du cadre (95, 96) sont raccordées l'une à l'autre par des moyens de jonction détachables.

4. Dispositif selon la revendication 3, caractérisé en ce que les moyens de jonction présentent, au bout du cadre (20) qui est dirigé vers le colis à lever (1), un boulon (106) qui traverse des creux de logement des parties du cadre et passe par les parties du cadre (95, 96).

5. Dispositif selon la revendication 3 ou 4, caractérisé en ce que les moyens de jonction présentent, à chaque côté extérieur des parties du cadre (95, 96), une plaque latérale continuelle (147, 148), et en ce que chaque partie du cadre (95, 96) est fixée aux deux plaques latérales (147, 148) par assemblage détachable.

6. Dispositif selon la revendication 5, caractérisé en ce qu'une traverse (24) attachée aux parties du cadre (95, 96) est prévue au bout du cadre qui est opposé au colis à lever (1).

7. Dispositif selon la revendication 6, caractérisé en ce qu'au moins la surface de transport supérieure (92) dépasse la traverse (24) en direction longitudinale du leveur.

8. Dispositif selon la revendication 6 ou 7, caractérisé en ce qu'au moins un entraînement (44) pour l'au moins un élément de transport supérieur (90) et/ou pour l'au moins un élément de transport inférieur (91) est disposé dans une cavité enfermée par la traverse (24).

9. Dispositif selon la revendication ou 7, caractérisé en ce qu'un entraînement (170) pour les éléments de transport (90, 91) qui est disposé transversalement par rapport au leveur et monté sur le cadre (20) est prévu dans la zone de la traverse (24).

10. Dispositif selon une des revendications 1 à 9, caractérisé en ce que l'au moins un élément de transport supérieur (90) et/ou l'au moins un élément de transport inférieur (91) est exécuté en bande de transport (33, 192; 35, 195), chaque bande de transport étant parallélisée à un plan longitudinal et vertical (21) du leveur, en ce que le brin supérieur (75) de chaque bande de transport supérieure (33; 192) peut être entraîné en sens égal à celui du brin inférieur (76) de chaque bande de transport inférieure (35; 195), le brin supérieur (75) de chaque bande de transport supérieure (33; 192) se trouvant au dedans de la surface de transport supérieure (92) et le brin inférieur (76) de chaque bande de transport inférieure (35; 195) se trouvant au dedans de la surface de transport inférieure (93), et en ce que l'au moins und bande de transport supérieure (33) est fait passer par un premier rouleau d'entraînement (36) entraînant l'au moins une bande de transport supérieure (33) et par un deuxième rouleau d'entraînement (37) entraînant l'au moins une bande de transport inférieure (35) et qui peut être entraîné par l'au moins une bande de transport supérieure (33).

11. Dispositif selon la revendication 10, caractérisé en ce que les bandes de transport (33, 35) sont exécutées en bandes dentées dont les dents s'engrènent avec une denture complémentaire des rouleaux d'entraînement (36, 37), et en ce qu'au moins les bandes de transport superiéures (33) sont dentées sur deux côtés opposés.

12. Dispositif selon la revendication 10 ou 11, caractérisé en ce que le premier rouleau d'entraînement (36) est exécuté sur un rotor extérieur (169) d'un moteur à tambour (170) et en ce qu'un essieu (171) du moteur à tambour (170) est fixé au cadre (20).

13. Dispositif selon une des revendications 1 à 9, caractérisé en ce que l'au moins un élément de transport supérieur (90) et/ou l'au moins un élément de transport inférieur (91) est exécuté en bande de transport (33, 192; 35, 195), chaque bande de transport étant parallélisée à un plan longitudinal et vertical (21) du leveur, en ce que le brin supérieur (75) de chaque bande de transport supérieure (33; 192) peut être entraîné en sens égal à celui du brin inférieur (76) de chaque bande de transport inférieure (35; 195), le brin supérieur (75) de chaque bande de transport supérieure (33; 192) se trouvant au dedans de la surface de transport supérieure (92) et le brin inférieur (76) de chaque bande de transport inférieure (35; 195) se trouvant au dedans de la surface de transport inférieure (93), en ce que l'au moins une bande de transport supérieure (33) est fait passer par un premier rouleau d'entraînement (36) entraînant l'au moins une bande de transport supérieure (33), en ce que l'au moins une bande de transport inférieure (35) est fait passer par un deuxième rouleau d'entraînement (37) entraînant l'au moins une bande de transport inférieure (35), et en ce que les rouleaux d'entraînement (36, 37) peuvent être entraînés en sens de rotation opposés par un entraînement (44).

14. Dispositif selon une des revendications 10 à 13, caractérisé en ce qu'au moins un des rouleaux d'entraînement (36; 37) est adjustable par rapport au cadre (20) pour tendre les bandes de transport (33; 35).

15. Dispositif selon une des revendications 10 à 13, caractérisé en ce qu'au bout dirigé vers le colis à lever (1), le cadre (20) présente un renverseur (26) portant des poulies de renvoi (32, 34) pour les bandes de transport (33, 35) qui est adjustable longitudinalement par rapport au restant du cadre (20) afin de tendre les bandes de transport (33, 35).

16. Dispositif selon une des revendications 10 à 15, caractérisé en ce que les éléments de transport (90; 91) sont respectivement exécutés en un nombre de bandes de transport supérieures (33) et de bandes de transport inférieures (35), et en ce que des poulies de renvoi (32, 34) pour les bandes de transport (33; 35) sont montées de telle manière sur le bout du cadre (20) qui est dirigé vers le colis à lever (1), que les poulies de renvoi (32) des bandes de transport supérieures (33) s'engrènent entre les écartements latéraux des poulies de renvoi (34) des bandes de transport inférieures (35) et réciproquement.

17. Dispositif selon une des revendications 3 à 14, caractérisé en ce qu'au bout dirigé vers le colis à lever (1), chaque partie du cadre (95; 96) présente des doigts (98; 99), portant chacun une poulie de renvoi (32; 34) pour un élément de transport (90; 91) correspondant exécuté en bande de transport (33; 35), qui s'étendent vers le colis à lever (1) et sont disposés à un écartement latéral (97) les uns des autres, et en ce que les doigts (98) de la partie supérieure du cadre (95) s'engrènent au dedans les écartements latéraux (97) entre les doigts (99) de la partie inférieure du cadre (96) et réciproquement.

18. Dispositif selon une des revendications 10 à 15, caractérisé en ce qu'en cas d'utilisation d'une seule bande de transport supérieure (192), cette bande de transport supérieure (192) est fait passer par un premier rouleau de renvoi (191) monté sur le cadre (20) en face du colis à lever (1), en ce que le brin inférieur de la bande de transport supérieure (192) est fait passer par un deuxième rouleau de renvoi (193) monté plus haut sur le cadre (20) et directement à côté du premier rouleau de renvoi (191), et en ce que l'au moins un élément de transport inférieur (91, 195; 91, 199) commence au dessous du deuxième rouleau de renvoi (139) et à côté du premier rouleau de renvoi (191).

19. Dispositif selon une des revendications 1 à 10, 14 et 18, caractérisé en ce qu'au moins quelques-uns des éléments de transport (91) sont exécutés en roulettes sphériques (199).

20. Dispositif selon une des revendications 1 à 10, 14 et 18, caractérisé en ce qu'au moins quelques-uns des éléments de transport (90; 91) sont exécutés en rouleaux de transport (202; 203) qui sont disposés transversalement au sens longitudinal du leveur et montés de manière pivotante sur le cadre (20).

21. Dispositif selon une des revendications 1 à 20, caractérisé en ce que le cadre (20) présente aux côtés latéraux opposés respectivement une glissière de guidage (22, 23) qui est parallélisée au plan longitudinal (21), et en ce qu'au moins deux rouleaux porteurs (50) du leveur (5) sont en prise avec chaque glissière de guidage (22, 23).

22. Dispositif selon la revendication 21, caractérisé en ce qu'au moins un élément d'arrêt (72) apte à être commandé et entraîné est prévu au leveur (5), et en ce qu'en positions relatives bien choisies du cadre (20) et du restant du leveur (5), chaque élément d'arrêt (72) peut entrer en prise avec le cadre (20) de telle manière que d'autres mouvements relatifs soient évités.

23. Dispositif selon la revendication 21 ou 22, caractérisé en ce que les rouleaux porteurs (50) de chaque glissière de guidage (22, 23) sont montés de manière pivotante à un dispositif de guidage (51, 52), et en ce que chaque dispositif de guidage (51, 52) peut être basculé autour d'un axe de basculement (54) horizontal d'un porteur (55) du leveur (5).

24. Dispositif selon une des revendications 1 à 23, cararterisé en ce qu'un clapet articulé (80) est prévu au leveur (5) dans le trajet du colis à lever (1), laquelle permettant d'arrêter un entraînement (44) des éléments de transport (33, 35) par actionnement d'un interrupteur de fin de course (86) au moment où le colis à lever (1) a atteint une position finale sur le cadre (20).

EP 0 321 680 B1

Fig.1

Fig.3

Fig. 2

Fig.4

Fig.5

Fig.6A

Fig. 6B

**Fig.7A**

Fig. 7 B

Fig.8

Fig.9

32

100

101

34

104

102

106

98

96

161

163

164

124

160

164

162

X

X

Fig. 11

143

142

24

141

44

148   96   132   92   33

165

33

131

Fig. 13

Fig.10

Fig.12

Fig.14

Fig. 15

EP 0 321 680 B1

Fig.16

169

170

95

186

187

172

175

171

186

177

147

24

95

Fig.17

Fig.18

Fig.20

191
192
190
199
189
20
200
196
91

Fig.19

199
198
197
189
93
196
90 92
20
200
192
193
191
190
91

Fig. 21

Fig. 22